# EUROPEAN PATENT SPECIFICATION

(11) **EP 3 203 369 B1**
(45) Date of publication and mention of the grant of the patent: **29.09.2021**
(21) Application number: 17151162.9
(22) Date of filing: 12.01.2017
(51) Int. Cl.: H04N 1/00, H04N 1/44, G06F 3/12

(54) **IMAGE FORMING APPARATUS, PRINT CONTROL METHOD, AND COMPUTER-READABLE RECORDING MEDIUM ENCODED WITH PRINT CONTROL PROGRAM**
BILDERZEUGUNGSVORRICHTUNG, DRUCKSTEUERUNGSVERFAHREN UND COMPUTERLESBARES AUFZEICHNUNGSMEDIUM MIT DARAUF CODIERTEM DRUCKSTEUERUNGSPROGRAMM
APPAREIL DE FORMATION D'IMAGES, PROCÉDÉ DE COMMANDE D'IMPRESSION ET SUPPORT D'ENREGISTREMENT LISIBLE PAR ORDINATEUR CODÉ AU MOYEN DU PROGRAMME DE COMMANDE D'IMPRESSION

(30) Priority: 05.02.2016 JP 2016020563
(43) Date of publication of application: 09.08.2017
(73) Proprietor: Konica Minolta, Inc., Tokyo 100-7015 (JP)
(72) Inventor: Kawaguchi, Toshikazu, Tokyo, 100-7015 (JP); Iwai, Hidetaka, Tokyo, 100-7015 (JP); Sawayanagi, Kazumi, Tokyo, 100-7015 (JP); Otake, Toshihiko, Tokyo, 100-7015 (JP); Uchida, Hisashi, Tokyo, 100-7015 (JP); Taniguchi, Yosuke, Tokyo, 100-7015 (JP); Soejima, Hideaki, Tokyo, 100-7015 (JP)
(74) Representative: Hoffmann Eitle

(56) References cited:
- JP-A- 2011 009 907
- JP-A- 2013 125 551
- US-A1- 2013 208 299

## Description

### BACKGROUND OF THE INVENTION

### Field of the Invention

The present invention relates to an image forming apparatus, a print control method, a computer-readable recording medium encoded with a print control program. In particular, the present invention relates to an image forming apparatus, which a plurality of users can log in, a print control method performed in the image forming apparatus, and a computer-readable recording medium encoded with the print control program.

### Description of the Related Art

US 2013/0208299 A1 describes a printing device which includes an authentication unit, a job input unit configured to receive input of a print job, a printing processing unit configured to perform printing processing for the print job, and an instruction input unit configured to receive input of an instruction on output of a printed matter of the print job. The printing processing in the printing processing unit is controlled in accordance with an instruction from a user successfully authenticated by the authentication unit. The printing device further includes a proxy registration processing unit capable of setting, for the print job, a user different from an issuer of the print job as a user who instructs output of the printed matter, and causes the printed matter to be output when the instruction on output is made by the user set as the user who instructs output of the printed matter.

A user who is located at a distant position from a Multi Function Peripheral (hereinafter referred to as an MFP) can instruct the MFP to print by using a portable information apparatus such as a personal computer (hereinafter referred to as a "PC"), a smartphone or a tablet terminal.

On the other hand, a technology for allowing the MFP, which is used by a plurality of persons, to display data is known. For example, in JP 2013-125551 A, an image forming apparatus that includes a touch panel display including an operation surface and a display surface, and a controller, wherein the controller controls the display of the touch panel display to show a desktop screen of each user with each outer edge of the panel of the touch panel display being a bottom of a display, and a direction from the outer edge of the panel towards a center of the panel being an upward direction.

However, in the technology described in JP 2013-125551 A, because the plurality of persons can use the MFP, in the case where another user externally gives an instruction to execute a print job having a security setting, there is a problem that the print job cannot be executed since the MFP is in use.

### SUMMARY OF THE INVENTION

The present invention has been accomplished in view of the foregoing problem, and an object of the present invention is to provide an image forming apparatus capable of executing a job having a start condition early even in the case where a user who operates the image forming apparatus is present.

Another object of the present invention is to provide a print control method capable of executing a job having a start condition early even in the case where a user who operates the image forming apparatus is present.

Yet another object of the present invention is to provide a computer-readable recording medium encoded with a print control program capable of executing a job having a start condition early even in the case where a user who operates the image forming apparatus is present.

To achieve the above-described objects, according a first aspect of the present invention, there is provided an image forming apparatus as set out in Claim 1.

According to a second aspect of the present invention, there is provided an image forming apparatus as set out in Claim 2.

According to these aspects, in the case where the job having the activation condition is received from the information processing apparatus, because the activation condition is changed when the user who operates the image forming apparatus is in the predetermined state, it is possible to change users authenticated by the user authenticating means, transmit a plurality of pieces of user identification information for respectively identifying the plurality of users to the information processing apparatus, a response accepting means configured to accept a response of a designated user, wherein the state detecting means is configured to, in the case where the response of the designated user is accepted by the response accepting means, detect a predetermined state, and an activation condition changing means configured to, in response to detection of the predetermined state by the state detecting means, change the activation condition.

According to this aspect, in the case where the job having the activation condition is received from the information processing apparatus, because the activation condition is changed when the user who operates the image forming apparatus is in the predetermined state, it is possible to change the time when the job is executed. Therefore, it is possible to provide the image forming apparatus capable of executing the job having the start condition early even in the case where a user who operates the image forming apparatus is present.

Preferably, the activation condition changing means is configured to, in the case where the activation condition is authentication of a user who operates the information processing apparatus by the user authenticating the time when the job is executed. Therefore, it is possible to provide the image forming apparatus capable of executing the job having the start condition early even in the case where a user who operates the image forming apparatus is present.

According to the first aspect, the activation condition is changed to authentication of the user whose predetermined state has been detected, and therefore, it is possible to execute a job in the case where a predetermined state of the user who operates the image forming apparatus is detected.

Preferably, the image forming apparatus further includes an image picking means configured to pick up an image of a photographic subject and output its image data, wherein the user authenticating means is configured to authenticate the user who operates the operation accepting means based on the image data, of the picked-up image of the photographic subject, which is output by the image picking means.

According to this aspect, the user can be authenticated upon being determined as the photographic subject. This makes it unnecessary to input an operation for authentication and thereby improving operability.

According to the first aspect, the user who operates the image forming apparatus has already been authenticated, however, after the predetermined state is detected, the job is executed in response to re-authentication of the user. This allows the user whose predetermined state has been detected to determine a timing at which the job is executed.

According to the second aspect, the job is executed based on the operation being input to the image forming apparatus by the user whose predetermined state has been detected. This makes it possible to execute the job in accordance with the instruction by the user who actually operates the image forming apparatus. Therefore, the user whose predetermined state has been detected can acquire a sheet of paper on which an image is formed when the job is executed.

Preferably, the image forming apparatus further includes: a display that displays an image; and a request screen display configured to, in response to reception of a response including a piece of user identification information of a designated user selected by a user who operates the information processing apparatus among the plurality of users from the information processing apparatus after transmission of the plurality of pieces of user identification information, display a request screen for requesting execution of the received job in the display, wherein the response accepting means is configured to accept a response of the designated user after the request screen is displayed.

According to this aspect, in response to reception of the job having the activation condition with a plurality of users authenticated, a plurality of pieces of user identification information for respectively identifying the plurality of users are transmitted to the information processing apparatus; in response to reception of a response including a piece of user identification information of a designated user selected by a user who operates the information processing apparatus among the plurality of users, a request screen is displayed; and in the case where the response of the designated user is accepted after the request screen is displayed, the predetermined state is detected. Therefore, the predetermined state is detected in response to acceptance of the response of the designated user who operates the image forming apparatus among the plurality of users. This allows the user who operates the image forming apparatus to designate a user who acquire a sheet of paper on which an image is formed when the job is executed.

According to a third aspect of the present invention, there is provided a print control method performed in an image forming apparatus as set out in Claim 6.

According to a fourth aspect of the present invention, there is provided a print control method performed in an image forming apparatus as set out in Claim 7.

According to the third and fourth aspects, it is possible to provide a print control method capable of executing a job having a start condition early even in the case where a user who operates the image forming apparatus is present.

According to a fifth aspect of the present invention, there is provided a computer-readable recording medium encoded with a print control program executed by a computer as set out in Claim 8.

According to a sixth aspect of the present invention, there is provided a computer-readable recording medium encoded with a print control program executed by a computer as set out in Claim 9.

According to the fifth and sixth aspects, it is possible to provide the print control program capable of executing the job having the start condition early even in the case where a user who operates the image forming apparatus is present.

### BRIEF DESCRIPTION OF THE DRAWINGS

The above and other objects, advantages and features of the present invention will become more fully understood from the detailed description given herein below and the appended drawings which are given by way of illustration only, and thus are not intended as a definition of the limits of the present invention, and wherein:
Fig. 1 is a diagram showing one example of an overview of a print system in one embodiment of the present invention;
Fig. 2 is a perspective view showing an appearance of an MFP in the one embodiment of the present invention;
Fig. 3 is a block diagram showing an outline of a hardware configuration of an MFP;
Fig. 4 is a block diagram showing one example of a hardware configuration of a PC;
Fig. 5 is a diagram showing one example of functions of a CPU of the MFP;
Fig. 6 is a plan view showing a display surface of a display unit;
Fig. 7 is a diagram showing one example of a designated user selection screen;
Fig. 8 is a diagram showing one example of a request screen;
Fig. 9 is a first flow chart showing one example of a flow of a print control process;
Fig. 10 is a second flow chart showing the one example of the flow of the print control process; and
Fig. 11 is a flow chart showing one example of a flow of a job production process.

### DESCRIPTION OF THE PREFERRED EMBODIMENTS

Hereinafter, an embodiment of the present invention will be described with reference to the drawings. However, the scope of the invention is not limited to the illustrated examples.

In the following description, the same parts are denoted with the same reference characters. Their names and functions are also the same. Thus, a detailed description thereof will not be repeated.

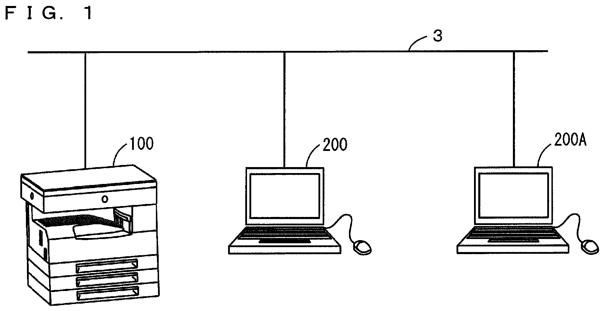

Fig. 1 is a diagram showing one example of an overview of a print system in one embodiment of the present invention. Referring to Fig. 1, the print system 1 includes an MFP (a Multi Function Peripheral) 100 and personal computers (hereinafter referred to as "PCs") 200, 200A. The MFP 100 and the PCs 200, 200A are respectively connected to a network 3 and can communicate with one another via the network 3. Further, the network 3 is connected to the internet, and the MFP 100 and the PCs 200, 200A can respectively communicate with another computer connected to the internet.

A driver program for controlling the MFP 100 is installed in each of the PCs 200, 200A, and each of the PCs 200, 200A can transmit a print job including print data to the MFP 100 and allow the MFP 100 to form an image of the print data. The PCs 200, 200A respectively have the same basic hardware configuration and functions. Thus, the PC 200 will be taken as an example in the description here, unless otherwise specified. While the PC 200 is described here as the example, it may be a computer carried and used by a user such as a smartphone, a tablet terminal and a PDA (Personal Digital Assistants) as long as a print driver for controlling the MFP 100 is installed therein.

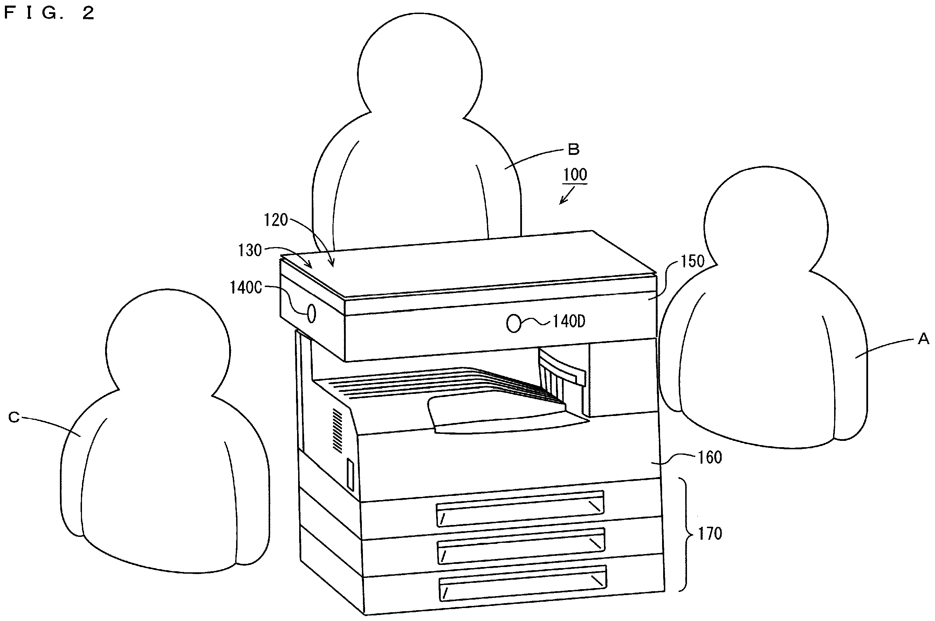

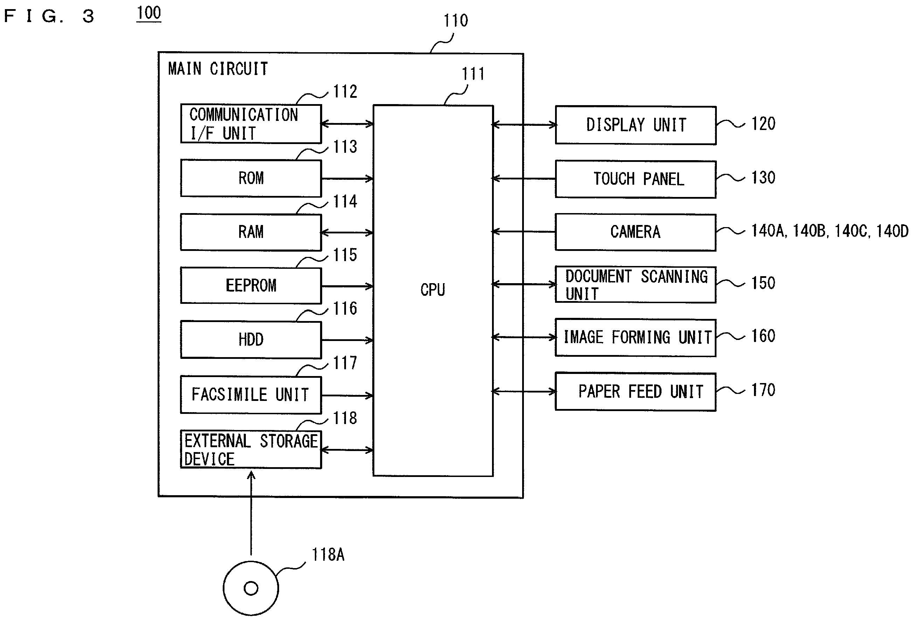

Fig. 2 is a perspective view showing the appearance of the MFP in the one embodiment of the present invention. Fig. 3 is a block diagram showing an outline of the hardware configuration of the MFP. Referring to Figs. 2 and 3, the MFP (Multi Function Peripheral) 100 is one example of an image forming apparatus and includes a main circuit 110, a display unit 120, a touch panel 130, cameras 140A to 140D, a document scanning unit 150 for scanning a document, an image forming unit 160 for forming an image on a sheet of paper or other medium based on image data output by the document scanning unit 150 scanning a document, and a paper feed unit 170 for supplying a sheet of paper to the image forming unit 160.

The main circuit 110 includes a CPU (Central Processing Unit) 111, a communication I/F (interface) unit 112, a ROM (Read Only Memory) 113, a RAM (Random Access Memory) 114, an EEPROM (Electrically Erasable and Programmable ROM) 115, an HDD (Hard Disk Drive) 116 as a mass storage device, a facsimile unit 117, and an external storage device 118 on which a CD-ROM (Compact Disk-ROM) 118A is mounted. The CPU 111 is connected to the display unit 120, the touch panel 130, the cameras 140A to 140D, the document scanning unit 150, the image forming unit 160 and the paper feed unit 170 to control the entire MFP 100.

The display unit 120 is a display device such as an LCD (Liquid Crystal Display) or an organic ELD (Electro-Luminescence Display). The display unit 120 is arranged in an upper portion of a main body of the MFP 100 with a display surface on which an image is displayed facing upward. The display unit 120 is connected to the main body of the MFP 100 to be turnable with respect to one edge of the display surface and can be opened and closed. The document scanning unit 150 is arranged below the display unit 120, and a scan surface with which the document scanning unit 150 scans a document is exposed with the display unit 120 turned and opened. The display unit 120 is controlled by the CPU 111 and displays an image.

The touch panel 130 is provided on an upper surface or a lower surface of the display unit 120. The touch panel 130 detects a position on the display surface of the display unit 120 designated by the user. The touch panel 130 outputs coordinates of the detected position to the CPU 111.

The CPU 111 specifies a position in an image displayed in the display unit 120 from the position on the display surface of the display unit 120 detected by the touch panel 130 and detects an operation by the user. For example, in the case where a keyboard is displayed in the display unit 120, if a position detected by the touch panel 130 is within an image of any key of the keyboard, the CPU 111 detects an operation of giving an instruction for the input of the key.

The cameras 140A to 140D are respectively installed at side surfaces, facing in four directions, of the main body of the MFP 100. Specifically, the camera 140A is provided at a left side surface of the MFP 100, the camera 140B is provided at a back surface of the MFP 100, the camera 140C is provided at a right side surface of the MFP 100, and the camera 140D is provided at a front surface of the MFP 100. Each of the cameras 140A to 140D picks up an image of a photographic subject, acquires image data and outputs the image data to the CPU 111. The case where the camera 140A picks up an image of a user A, the camera 140B picks up an image of a user B, and the camera 140C picks up an image of a user C will be described here as an example.

The ROM 113 stores a program that is executed by the CPU 111 or data necessary for execution of the program. The RAM 114 is used as a work area when the CPU 111 executes the program.

The communication I/F unit 112 is an interface for connecting the MFP 100 to the network 3. The CPU 111 communicates with a computer connected to the network 3 via the communication I/F unit 112 and receives data from and transmits data to the computer. Further, the communication I/F unit 112 can communicate with a computer connected to the internet via the network 3.

The facsimile unit 117 is connected to a PSTN (Public Switched Telephone Network) and transmits and receives facsimile data. The facsimile unit 117 converts the image data scanned by the document scanning unit 150 or the data stored in the HDD 116 into facsimile data and transmits the facsimile data to a facsimile device connected to the PSTN. Further, the facsimile unit 117 stores the received facsimile data in the HDD 116 or allows the image forming unit 160 to form an image of the facsimile data on a sheet of paper.

The external storage device 118 is mounted with the CD-ROM 118A. The CPU 111 can access the CD-ROM 118A via the external storage device 118. The CPU 111 loads a program recorded in the CD-ROM 118A, which is mounted on the external storage device 118, into the RAM 114 for execution. The program that is executed by the CPU 111 is not limited to the program recorded in the CD-ROM 118A, and a program stored in the HDD 116 may be loaded into the RAM 114 for execution. In this case, another computer connected to the network 3 may rewrite the program stored in the HDD 116 of the MFP 100, or may additionally write a new program therein. Further, the MFP 100 may download a program from another computer connected to the network 3 and store the program in the HDD 116. The program referred to here includes not only a program directly executable by the CPU 111 but also a source program, a compressed program, an encrypted program or the like.

In Fig. 2, the case where the three users A, B, C who attend a conference are using the MFP 100 in the conference is shown as an example. The user A is positioned in the vicinity of the left side surface of the MFP 100, the user B is positioned in the vicinity of the back surface of the MFP 100, and the user C is positioned in the vicinity of the right side surface of the MFP 100. In this case, the camera 140A outputs a picked-up image of the user A to the CPU 111, the camera 140B outputs a picked-up image of the user B to the CPU 111, and the camera 140C outputs a picked-up image of the user C to the CPU 111.

During the conference in which the users A, B, C are using the MFP 100, in the case where a user E who operates the PC 200 transmits a job having a security setting to the MFP 100, the user E cannot use the MFP 100, thereby not being able to execute the job. The job having the security setting is the job having authentication of the user E by the MFP 100 set as an activation condition. In the case where the MFP 100 receives the job having the activation condition, the MFP 100 does not execute the received job immediately but executes the received job on the condition that the user E is authenticated by the MFP 100. In the case where the user E who operates the PC 200 transmits the job having the security setting to MFP 100 during the conference in which the users A, B, C are using the MFP 100, the MFP 100 in the present embodiment can execute the job.

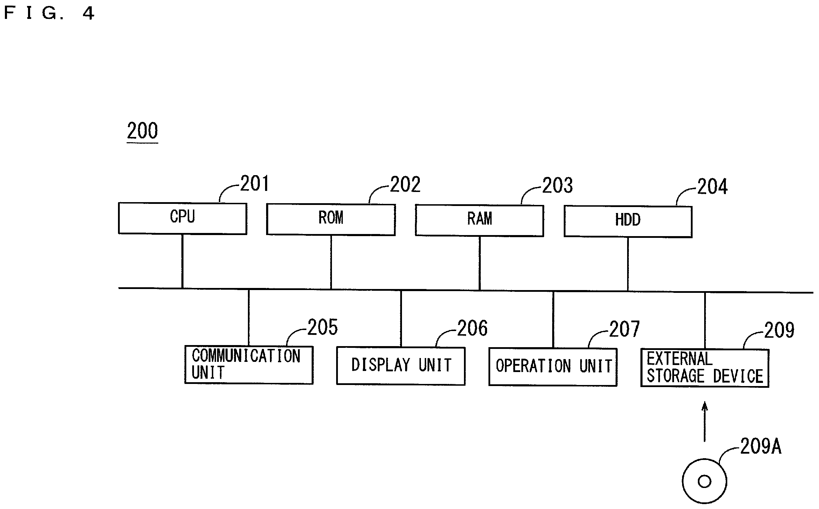

Fig. 4 is a block diagram showing one example of a hardware configuration of the PC. Referring to Fig. 4, the PC 200 includes a CPU 201 for controlling the entire PC 200, a ROM 202 for storing a program to be executed by the CPU 201, a RAM 203 that is used as a work area of the CPU 201, an HDD 204 for storing data in a non-volatile manner, a communication unit 205 for connecting the CPU 201 to the network 3, a display unit 206 for displaying information, an operation unit 207 for accepting input of operations by the user, and an external storage device 209.

The external storage device 209 is mounted with a CD-ROM 209A. While an example where the CPU 201 executes a program stored in the ROM 202 is described in the present embodiment, the CPU 201 may control the external storage device 209, read out the program to be executed by the CPU 201 from the CD-ROM 209A, and store the read program in the RAM 203 for execution.

A recording medium for storing the program to be executed by the CPU 201 is not limited to the CD-ROM 209A but may be a flexible disk, a cassette tape, an optical disk (MO/MD/DVD), an IC card, an optical card, or a semiconductor memory such as a mask ROM, an EPROM, or an EEPROM. Further, the CPU 201 may download a program from a computer connected to the network 3 and store the program in the HDD 204, or the computer connected to the network may write the program in the HDD 204. Then, the program stored in the HDD 204 may be loaded into the RAM 203 to be executed by the CPU 201. The program referred to here includes not only a program directly executable by the CPU 201 but also a source program, a compressed program, an encrypted program and the like.

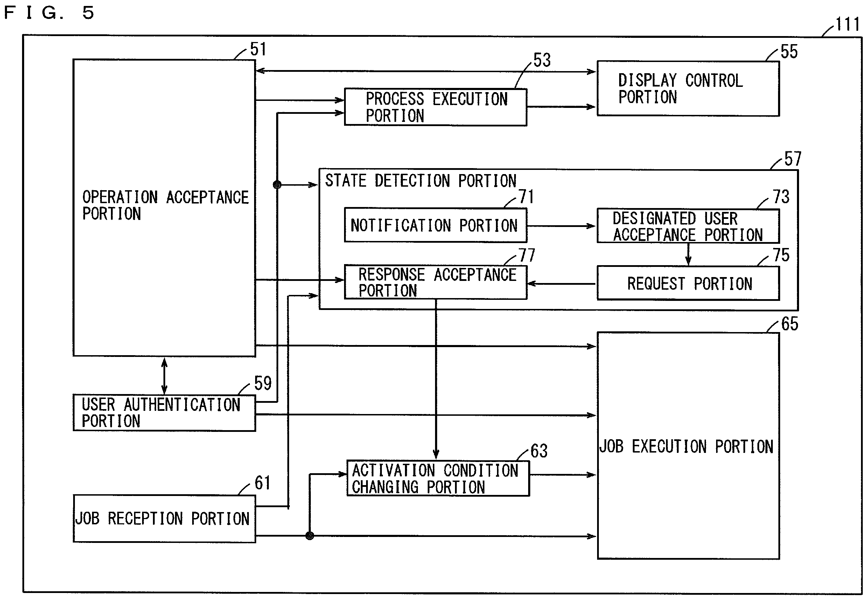

Fig. 5 is a diagram showing one example of the functions of the CPU included in the MFP. The functions shown in Fig. 5 are the functions formed in the case where the CPU 111 included in the MFP 100 executes a print control program stored in the ROM 113, the EEPROM 115, the HDD 116 or the CD-ROM 118A. Referring to Fig. 5, the CPU 111 includes an operation acceptance portion 51 that accepts an operation by the user, a process execution portion 53 that executes a process in accordance with the accepted operation, a display control portion 55 that controls the display unit 120, a user authentication portion 59 that authenticates the user, a state detection portion 57 that detects a state of the authenticated user, a job reception portion 61 that receives a job, a job execution portion 65 that executes the received job, and an activation condition changing portion 63.

The user authentication portion 59 authenticates the user and determines a position of the authenticated user. The user authentication portion 59 authenticates the user by facial authentication based on an image received from each of the cameras 140A to 140D. The MFP 100 stores the authentication information of a user who is permitted to use the MFP 100 in advance. The authentication information is a set of user identification information for identifying the user and feature information that is extracted from the picked-up facial image of the user. The feature information includes the collection of feature points that constitute a shape of each part in the facial image and information such as color of each part and the like. The user authentication portion 59 performs the facial authentication by using the feature information extracted from an image received from any of the cameras 140A to 140D and the feature information included in the authentication information stored in the HDD 116. Specifically, in the case where extracting a region in which a face is shown from an image received from the camera 140A, for example, the user authentication portion 59 extracts the feature information from the extracted region. Then, in the case where the authentication information including the feature information that matches the extracted feature information is stored in the HDD 116, the user authentication portion 59 authenticates the user A.

Further, in the case where authenticating the user, the user authentication portion 59 determines a position of the user based on a position where a camera that has picked up an image of the authenticated user among the cameras 140A to 140D is arranged. In the case where authenticating the user based on the image output by the camera 140A, the user authentication portion 59 determines that the position of the authenticated user is in the vicinity of the left side surface of the MFP 100. In the case where authenticating the user based on an image output by the camera 140B, the user authentication portion 59 determines that a position of the authenticated user is in the vicinity of the back surface of the MFP 100. In the case where authenticating the user based on an image output by the camera 140C, the user authentication portion 59 determines that a position of the authenticated user is in the vicinity of the right side surface of the MFP 100. In the case where authenticating the user based on an image output by the camera 140D, the user authentication portion 59 determines that a position of the authenticated user is in the vicinity of the front surface of the MFP 100. Thus, the maximum number of users to be simultaneously permitted to log in by the user authentication portion 59 is four.

In the present embodiment, because the camera 140A picks up the image of the user A, in the case where the user authentication portion 59 authenticates the user A, it is determined that the position of the user A is in the vicinity of the left side surface of the MFP 100. Because the camera 140B picks up the image of the user B, in the case where the user authentication portion 59 authenticates the user B, it is determined that the position of the user B is in the vicinity of the back surface of the MFP 100. Because the camera 140C picks up the image of the user C, in the case where the user authentication portion 59 authenticates the user C, it is determined that the position of the user C is in the vicinity of the right side surface.

When the user is authenticated, the user authentication portion 59 outputs a set of the user identification information of the authenticated user and position information indicating the position of the detected user to the operation acceptance portion 51, the process execution portion 53, the job execution portion 65 and the state detection portion 57.

The display control portion 55 controls the display unit 120 and allows the display unit 120 to display an image. A display surface of the display unit 120 includes a first personal display region, a second personal display region, a third personal display region, a fourth personal display region, and a common region commonly used among the four users.

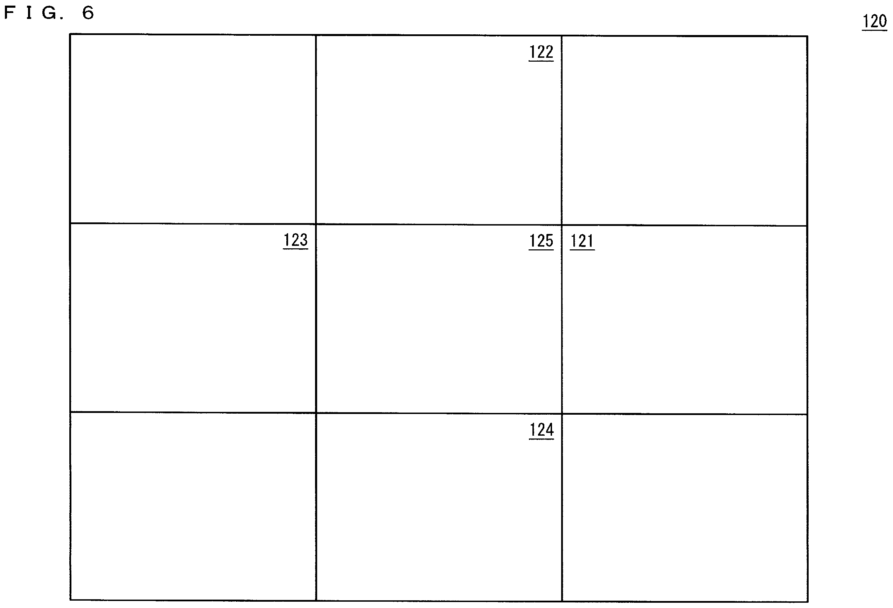

Fig. 6 is a plan view showing the display surface of the display unit. Referring to Fig. 6, the display surface of the display unit 120 includes the first personal display region 121, the second personal display region 122, the third personal display region 123, the fourth personal display region 124 and the common region 125. The first personal display region 121 is positioned in the vicinity of an edge close to the left side surface of the MFP 100 among four edges of the display surface. The second personal display region 122 is positioned in the vicinity of an edge close to the back surface of the MFP 100 among the four edges of the display surface. The third personal display region 123 is positioned in the vicinity of an edge close to the right side surface of the MFP 100 among the four edges of the display surface. The fourth personal display region 124 is positioned in the vicinity of an edge close to the front surface among the four edges of the display surface. The common region 125 is positioned at the center of the display surface.

Returning to Fig. 5, based on the set of the user identification information and the position information received from the user authentication portion 59, the operation acceptance portion 51 associates the user specified by the user identification information with any one of the first personal display region 121, the second personal display region 122, the third personal display region 123 and the fourth personal display region 124. The operation acceptance portion 51 associates the user, whose user identification information is associated with the position information indicating the position in the vicinity of the left side surface, with the first personal display region 121, associates the user, whose user identification information is associated with the position information indicating the position in the vicinity of the back surface, with the second personal display region 122, associates the user, whose user identification information is associated with the position information indicating the position in the vicinity of the right side surface, with the third personal display region 123, and associates the user, whose user identification information is associated with the position information indicating the position in the vicinity of the front surface, with the fourth personal display region 124.

The operation acceptance portion 51 accepts an operation by the user based on the position in the display surface of the display unit 120 detected by the touch panel 130. Specifically, in the case where a position in the first personal display region 121 is detected by the touch panel 130, the operation acceptance portion 51 accepts the operation as the operation by the user A associated with the first personal display region 121 based on the detected position. In the case where a position in the second personal display region 122 is detected by the touch panel 130, the operation acceptance portion 51 accepts the operation as the operation by the user B associated with the second personal display region 122 based on the detected position. In the case where a position in the third personal display region 123 is detected by the touch panel 130, the operation acceptance portion 51 accepts the operation as the operation by the user C associated with the third personal display region 123 based on the detected position. In the case where a position in the common region 125 is detected by the touch panel 130, the operation acceptance portion 51 accepts the operation based on the detected position. However, the operation acceptance portion 51 does not determine a subject (a person) who has performed the operation. In the case where accepting the operation, if determining the subject (person) who has performed the operation, the operation acceptance portion 51 outputs the user identification information of the determined user to the process execution portion 53.

The operations that are accepted by the operation acceptance portion 51 include an operation of designating data that is to be a target of a process, an operation of editing data that is to be a target of a process, and an operation of deleting data that is to be a target of a process, for example. For example, with the display control portion 55 displaying a data designation acceptance screen that lists pieces of data identification information for identifying data in the display unit 120, in response to detection by the touch panel 130 of a position in the image in which the data identification information is displayed, the operation acceptance portion 51 accepts the operation of designating the data specified by the data identification information displayed at the detected position. In the case where accepting the operation of designating data, the operation acceptance portion 51 outputs a read instruction including the data identification information displayed at the position detected by the touch panel 130 to the process execution portion 53.

The process execution portion 53 executes a process in accordance with an operation accepted by the operation acceptance portion 51. In response to reception of the read instruction from the operation acceptance portion 51, the process execution portion 53 acquires the data specified by the data identification information included in the read instruction. In the case where receiving the user identification information from the operation acceptance portion 51, when acquiring the data in accordance with the read instruction, the process execution portion 53 acquires the data within a range of access permission of the user specified by the user identification information received from the operation acceptance portion 51. The access permission is the right to access the data. For example, three levels including the highest level 1, the intermediate level 2 and the lowest level 3 are defined. In the case where the level 2 is provided to the user A, the user A cannot access and read the data provided with the level 1 with his/her access permission. However, the user A can access and read the data provided with the level 2 or the level 3.

In the case where the data specified by the data identification information is stored in the HDD 116, the process execution portion 53 reads out the data specified by the data identification information from the HDD 116. In the case where the data specified by the data identification information is stored in an external information processing apparatus, the process execution portion 53 controls the communication I/F unit 112 and acquires the data specified by the data identification information from the external computer. In the case where the data specified by the data identification information is stored in the CD-ROM 118A, the process execution portion 53 controls the external storage device 118 and reads out the data specified by the data identification information from the CD-ROM 118A. The process execution portion 53 outputs the acquired data to the display control portion 55. The display control portion 55 displays an image of the data received from the process execution portion 53 in the display unit 120.

Further, when a position in the image of the data displayed in the display unit 120 by the display control portion 55 is detected by the touch panel 130, the operation acceptance portion 51 specifies the data that is a target of a process. For example, the operation acceptance portion 51 outputs a display instruction to the display control portion 55 and allows the display control portion 55 to display an operation acceptance screen in the display unit 120. The operation acceptance screen includes a button to which an operation is assigned. When a position within the button included in the operation acceptance screen is detected by the touch panel 130, the operation acceptance portion 51 accepts the operation assigned to the button. When specifying the data that is the target of the process, the operation acceptance portion 51 outputs a set of the data identification information for identifying data and the operation accepted by the touch panel 130 to the process execution portion 53.

In response to reception of the set of the data identification information and the operation from the operation acceptance portion 51, the process execution portion 53 processes the data specified by the data identification information in accordance with the operation received from the operation acceptance portion 51. For example, in the case where the operation received from the operation acceptance portion 51 is an operation of editing, the process execution portion 53 edits the data and outputs a data display instruction including the edited data to the display control portion 55. In response to reception of the data display instruction from the process execution portion 53, the display control portion 55 displays an image of the updated data included in the data display instruction in the display unit 120. In the case where the operation received from the operation acceptance portion 51 is an operation of deleting the data, the process execution portion 53 erases the data specified by the data identification information and outputs an erasure instruction including the data identification information to the display control portion 55. In response to the reception of the erasure instruction, the display control portion 55 ends the display of the image of the data specified by the data identification information included in the erasure instruction among the images displayed in the display unit 120.

The job reception portion 61 controls the communication I/F unit 112, receives a job, outputs the received job to the activation condition changing portion 63 and the job execution portion 65, and outputs a detection instruction to the state detection portion 57. The detection instruction includes device identification information of a device that has transmitted the job. The case where the job reception portion 61 receives a job having the activation condition from the PC 200 will be described here as an example. The activation condition is a condition for executing a job. The activation condition set here is that a user who has given an instruction to execute a job is authenticated. In this case, the activation condition includes the user identification information for identifying the user who has given an instruction to execute the job.

The job execution portion 65 executes the job received from the job reception portion 61. In the case where the activation condition is set for the job received from the job reception portion 61, the job execution portion 65 does not execute the job immediately but executes the job on the condition that the activation condition is satisfied. Because the activation condition is that the user who has given an instruction to execute the job is authenticated, in response to reception of the user identification information that is the same as the user identification information included in the activation condition from the user authentication portion 59, the job execution portion 65 executes the job. Specifically, the job execution portion 65 controls the image forming unit 160 and allows the image forming unit 160 to form an image of the print data included in the job.

The state detection portion 57 receives a set of the user identification information and the position information of the user authenticated from the user authentication portion 59. In the case where a plurality of users are authenticated by the user authentication portion 59, the state detection portion 57 receives sets of the user identification information and the position information of all of the plurality of authenticated users. In response to reception of the detection instruction from the job reception portion 61, the state detection portion 57 detects a state of the user who is authenticated at that time point. The state detection portion 57 includes a notification portion 71, a designated user acceptance portion 73, a request portion 75, and a response acceptance portion 77. In response to the reception of the detection instruction, the notification portion 71 notifies a device specified by the device identification information included in the detection instruction of the user who has been authenticated by the user authentication portion 59. Because the PC 200 transmits a job, the detection instruction includes the device identification information of the PC 200. In this case, the notification portion71 controls the communication I/F unit 112, transmits the user identification information received from the user authentication portion 59 to the PC 200, and outputs an acceptance instruction to the designated user acceptance portion 73. In the case where a plurality of pieces of user identification information are received from the user authentication portion 59, the notification portion 71 transmits all of the plurality of pieces of identification information to the PC 200.

The PC 200, which receives the user identification information from the MFP 100, displays a designated user selection screen based on the user identification information received from the MFP 100, and accepts an operation of inputting in accordance with the designated user selection screen and selecting the designated user by the user. In response to acceptance of the operation of selecting the designated user, the PC 200 sets the selected user identification information as the user identification information of the designated user, and transmits the user identification information of the designated user to the MFP 100.

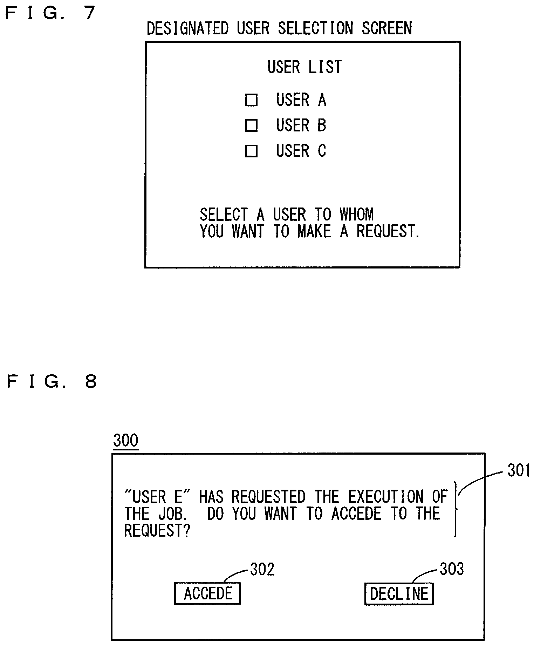

Fig. 7 is a diagram showing one example of the designated user selection screen. Referring to Fig. 7, the designated user selection screen is a screen that displays the user identification information for identifying the user who is logged in the MFP 100 in a selectable manner. Specifically, the designated user selection screen is a screen where the pieces of user identification information "User A", "User B" and "User C" are arranged, and includes check boxes arranged at the left of each of the pieces of user identification information "User A", "User B" and "User C". An operation of selecting the designated user by the user is an operation of selecting the check box.

Returning to Fig. 5, in response to reception of the acceptance instruction, the designated user acceptance portion 73 accepts the designated user. The designated user is a user selected by the user who operates the PC 200 among one or more users authenticated by the user authentication portion 59. Specifically, when the communication I/F unit 112 receives the user identification information from the PC 200, the designated user acceptance portion 73 accepts the user specified by the received user identification information as the designated user. The designated user acceptance portion 73 outputs the user identification information, which the communication I/F unit 112 receives from the PC 200, to the request portion 75 as the user identification information of the accepted designated user.

In response to reception of the user identification information of the designated user from the designated user acceptance portion 73, the request portion 75 requests the designated user to execute the job and outputs the acceptance instruction to the response acceptance portion 77. Specifically, the request portion 75 displays a request screen for requesting the execution of the job in the display unit 120.

Fig. 8 is a diagram showing one example of the request screen. Referring to Fig. 8, the request screen 300 includes a message 301 " "User E" has requested the execution of the job. Do you want to accede to the request?" and an acceding button 302 for giving an instruction to accede to the request, and a declining button for giving an instruction to decline the request.

Returning to Fig. 5, a region in which the request portion 75 displays the request screen 300 is a region corresponding to the position specified by the position information that makes a set with the user identification information of the designated user in the display surface of the display unit 120. Specifically, in the case where the designated user is the user A, the request portion 75 displays the request screen in the first personal display region 121 corresponding to the user A. In the case where the designated user is the user B, the request portion 75 displays the request screen in the second personal display region 122 corresponding to the user B. In the case where the designated user is the user C, the request portion 75 displays the request screen in the third personal display region 123 corresponding to the user C.

When a position within the acceding button 302 in the request screen displayed in the display unit 120 is detected by the touch panel 130, the operation acceptance portion 51 accepts an operation of acceding to the request, and outputs an acceding signal to the response acceptance portion 77. When a position within the declining button 303 is detected by the touch panel 130, the operation acceptance portion 51 accepts an operation of declining the request and outputs a declining signal to the response acceptance portion 77.

In response to the reception of the acceding signal from the operation acceptance portion 51 after the reception of the acceptance instruction from the request portion 75, the response acceptance portion 77 outputs a change instruction to the activation condition changing portion 63 and transmits an acceding notification to the PC 200. The acceding notification includes a message indicating that the designated user has acceded to the request. The PC 200, which receives the acceding notification, displays the message included in the acceding notification. Thus, the user who operates the PC 200 can be informed of the acceding of the request by the designated user. The change instruction includes the user identification information of the designated user. In response to the acceptance of the operation of declining the request by the operation acceptance portion 51 after the reception of the acceptance instruction from the request portion 75, the response acceptance portion 77 does not output the change instruction to the activation condition changing portion 63 and returns a declining notification to the PC 200. The declining notification includes a message indicating that the request has been declined. The PC 200, which receives the declining notification, displays the message included in the declining notification. Thus, the user who operates the PC 200 can be informed of the declining of the request by the designated user.

In response to reception of the change instruction from the response acceptance portion 77, the activation condition changing portion 63 changes the activation condition set for the job received from the job reception portion 61. Specifically, the authentication of the user who has given an instruction to execute the job, which is set as the activation condition included in the job, is changed to authentication of the designated user. The activation condition changing portion 63 outputs the job having the changed activation condition to the job execution portion 65.

In the case where receiving a job from the activation condition changing portion 63, the job execution portion 65 executes the job received from the activation condition changing portion 63 and erases the same job received from the job reception portion 61. Because the designated user specified by the user identification information included in the activation condition has already been authenticated by the user authentication portion 59, in response to the reception of the job from the activation condition changing portion 63, the job execution portion 65 executes the job. Further, because the activation condition is changed, on the condition that the designated user, specified by the user identification information included in the activation condition included in the job received from the activation condition changing portion 63, is authenticated again by the user authentication portion 59, the job execution portion 65 may execute the job.

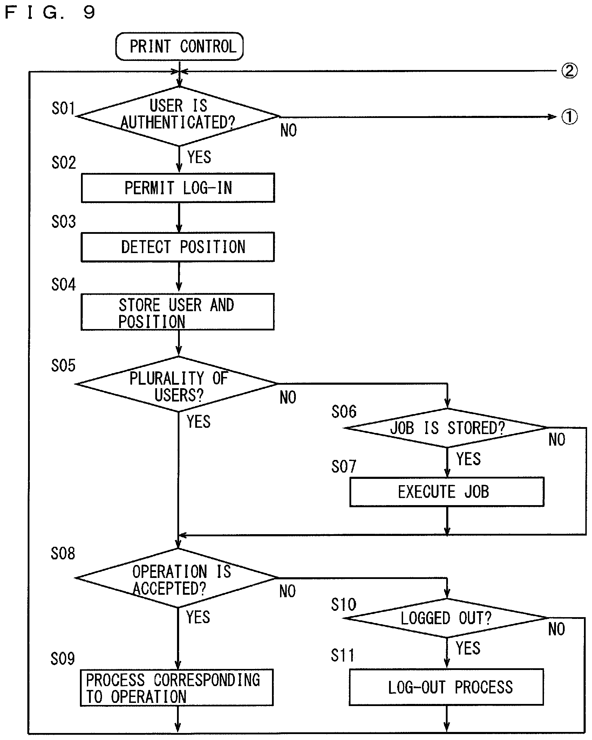

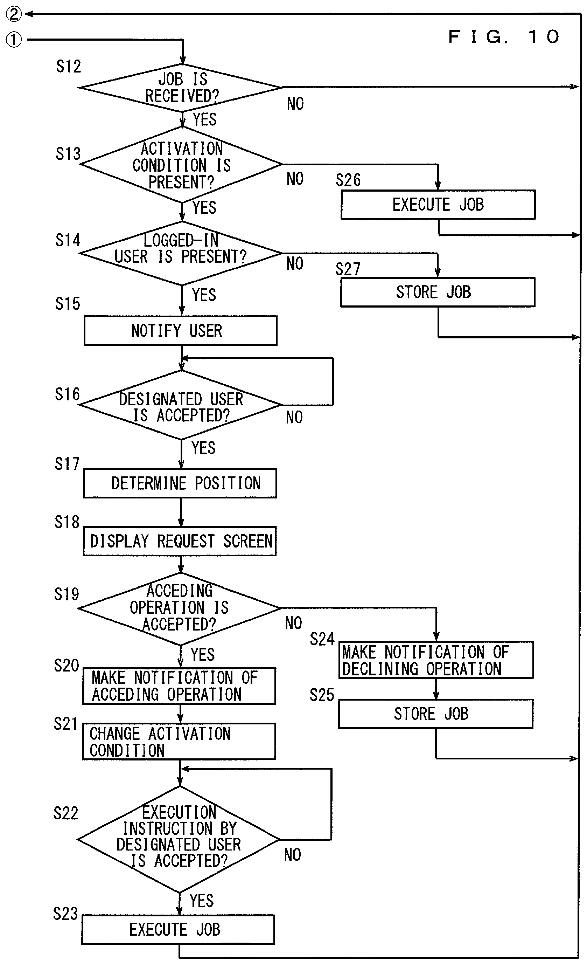

Figs. 9 and 10 are flow charts showing one example of a flow of a conference assistance process. The conference assistance process is a process that is executed by the CPU 111 in the case where the CPU 111 included in the MFP 100 executes a conference assistance program stored in the ROM 113, the EEPROM 115, the HDD 116 or the CD-ROM 118A. Referring to Figs. 9 and 10, the CPU 111 determines whether the user has been authenticated (step S01). If the user is authenticated, the process proceeds to the step S02. If not, the process proceeds to the step S12. The user is authenticated by the facial authentication based on the image received from each of the cameras 140A to 140D. For example, in the case where a region in which a face is shown is extracted from the image received from the camera 140D, the feature information is extracted from the extracted region. Then, in the case where the authentication information including the feature information that matches the extracted feature information is stored in the HDD 116, the user, who is specified by the user identification information included in the authentication information including the feature information that matches the extracted feature information, is authenticated.

In the step S02, the authenticated user is permitted to log in, and the process proceeds to the step S03. In the step S03, a position of the user is detected. The position of the user is determined based on the position at which the camera which has picked up an image of the authenticated user among the camera 140A to 140D is arranged. Specifically, in the case where the user is authenticated based on an image output by the camera 140A, the CPU 111 determines that the position of the authenticated user is in the vicinity of the left side surface of the MFP 100. In the case where the user is authenticated based on an image output by the camera 140B, the CPU 111 determines that the position of the authenticated user is in the vicinity of the back surface of the MFP 100. In the case where the user is authenticated based on an image output by the camera 140C, the CPU 111 determines that the position of the authenticated user is in the vicinity of the right side surface of the MFP 100. In the case where the user is authenticated based on an image output by the camera 140D, the CPU 111 determines that the position of the authenticated user is in the vicinity of the front surface of the MFP 100.

The case where the user A is authenticated in the vicinity of the left side surface of the MFP 100, the user B is authenticated in the vicinity of the back surface of the MFP 100, and the user C is authenticated in the vicinity of the right side surface of the MFP 100 will be described here as an example.

Then, the CPU 111 associates the user authenticated in the step S01 with the position detected in the step S03 and store them in the HDD 116 (step S04). Specifically, a set of the user identification information for identifying the user and the position identification information for identifying the position is stored in a predetermined region of the HDD 116. In the next step S05, whether a plurality of users are permitted to log in is determined. If the plurality of users are permitted to log in, the process proceeds to the step S08. If not, the process proceeds to the step S06.

In the step S08, whether an operation has been accepted is determined. The CPU 111 accepts an operation by the user based on the position detected by the touch panel 130. The operation by the user includes an operation of designating data to be a target of a process, an operation of editing data to be a target of a process, and an operation of deleting data to be a target of a process, for example. If the operation has been accepted, the process proceeds to the step S09. If not, the process proceeds to the step S10. In the step S09, a process is executed in accordance with the operation accepted in the step S08, and the process returns to the step S01.

In the step S10, whether the user has logged out is determined. The CPU 111 sequentially reads out the sets of the user identification information and the position identification information stored in the step S04. Then, if an image of a person as a photographic subject is not included in the image output by the camera corresponding to the position specified by the read position identification information among the cameras 140A to 140D, it is determined that the user specified by the read user identification information has logged out. If an image of a person as a photographic subject is included in the image, it is determined that the user is logged in. If any of the users has logged out, the process proceeds to the step S11. If not, the process returns to the step S01. In the step S11, a log-out process for the user who has logged out is executed, and the process returns to the step S01. Specifically, the set including the user identification information of the user who has logged out among the sets of the user identification information and the position identification information stored in the step S04 is erased from the HDD 116.

In the step S12, whether a job has been received is determined. The CPU 111 determines whether the communication I/F unit 112 has received a job. If the communication I/F unit 112 receives a job, the process proceeds to the step S13. If not, the process returns to the step S01. The case where a job is received from the PC 200 will be described here as an example. In the step S13, whether the activation condition is set for the job received in the step S12 is determined. If the activation condition is set, the process proceeds to the step S14. If not, the process proceeds to the step S26. In the step S26, the job received in the step S12 is executed, and the process returns to the step S01.

In the step S14, the CPU 111 determines whether a logged-in user is present. Whether a set of the user identification information and the position identification information stored in the HDD 116 in the step S04 is stored without being erased in the step S11 is determined. If the set of the user identification information and the position identification information is stored in a predetermined region of the HDD 116, it is determined that a logged-in user is present. In the case where a logged-in user is present, the process proceeds to the step S15. If not, the process proceeds to the step S27. In the step S27, the job received in the step S12 is stored in the HDD 116, and the process returns to the step S01.

In the step S15, the CPU 111 notifies the user, of the device that has transmitted the job, of the logged-in user. Specifically, the CPU 111 transmits all of the user identification information stored in the predetermined region of the HDD 116 in the step S04 to the device, which has transmitted the job received in the step S12 via the communication I/F unit 112, that is, the PC 200 in this case. The PC 200, which receives the user identification information, displays the designated user selection screen that displays the user identification information in a selectable manner. If the user of the PC 200 designates any of the user identification information included in the designated user selection screen, the PC 200 returns the designated user identification information as the information for identifying the designated user.

In the step S16, whether the designated user has been accepted is determined. Whether the communication I/F unit 112 has received the user identification information of the designated user from the PC 200 is determined. The process waits until the communication I/F unit 112 receives the user identification information of the designated user. If the communication I/F unit 112 receives the user identification information of the designated user, the process proceeds to the step S17.

In the next step S17, the position of the designated user is specified. The CPU 111 extracts the set including the user identification information that is the same as the user identification information of the designated user among the sets of the user identification information and the position identification information stored in the HDD 116, and specifies the position identified by the position identification information included in the extracted set. In the case where the user A is designated as the designated user, a position in the vicinity of the left side surface of the MFP 100 is specified. In the case where the user B is designated as the designated user, a position in the vicinity of the back surface of the MFP 100 is specified. In the case where the user C is designated as the designated user, a position in the vicinity of the right side surface of the MFP 100 is specified.

In the step S18, the request screen is displayed in a region corresponding to the position specified in the step 17. Specifically, the request screen is displayed in the region, corresponding to the position specified in the step S17, in the display surface of the display unit 120. In the case where the user A is designated as the designated user, the request screen is displayed in the first personal display region 121 corresponding to the left side surface of the MFP 100. In the case where the user B is designated as the designated user, the request screen is displayed in the second personal display region 122 corresponding to the back surface of the MFP 100. In the case where the user C is designated as the designated user, the request screen is displayed in the third personal display region 123 corresponding to the right side surface of the MFP 100. In the case where the user is authenticated in the vicinity of the front surface of the MFP 100, and when the user who is authenticated in the vicinity of the front surface of the MFP 100 is designated as the designated user, the request screen is displayed in the fourth personal display region 124 corresponding to the front surface of the MFP 100. The request screen is a screen for requesting the designated user to execute the job and acquire a sheet of paper on which an image is formed when the job is executed, and includes the acceding button to which the operation of giving an instruction to accede to the request and the declining button to which the operation of giving an instruction to decline the request is assigned. For example, in the case where the designated user is designated by the user E who operates the PC 200, the request screen shown in Fig. 8 is displayed.

In the step S19, whether the acceding operation of acceding to the request has been accepted is determined. If a position within the acceding button has been detected by the touch panel 130, the CPU 111 accepts the acceding operation. If the acceding operation has been accepted, the process proceeds to the step S20. If not, the process proceeds to the step S24. In the step S20, the notification is made that the designated user has acceded to the request, and the process proceeds to the step S21. Specifically, the CPU 111 controls the communication I/F unit 112 and transmits the acceding notification including the message indicating that the designated user has acceded to the request to the PC 200. Because the PC 200, which receives the acceding notification, displays the message included in the acceding notification, the user who operates the PC 200 can be informed of the acceding of the request by the designated user.

In the step S21, the activation condition is changed. Specifically, the activation condition included in the job received in the step S12 is changed to the authentication of the designated user. Because the designated user is authenticated in the step S01, the activation condition is satisfied.

In the next step S22, the process waits until the execution instruction by the designated user is accepted. If the execution instruction by the designated user is accepted, the process proceeds to the step S23. For example, in the case where an execution instruction button for accepting an execution instruction is displayed in the region, corresponding to the position determined in the step S17, in the display surface of the display unit 120, and the touch panel 130 detects a position within the execution instruction button, the execution instruction is accepted. Because the execution instruction button is displayed in the region, corresponding to the position determined in the step S17, in the display surface of the display unit 120, it is determined that the execution instruction is accepted by the operation of the designated user. In the step S23, the job received in the step S12 is executed, and the process returns to the step S01. Specifically, the CPU 111 controls the image forming unit 160 and allows the image forming unit 160 to form an image of the print data included in the job on a sheet of paper in accordance with a print condition included in the job.

On the other hand, in the step S24, the notification is made that the request has been declined, and the process proceeds to the step S25. Specifically, the CPU 111 controls the communication I/F unit 112 and returns the declining notification including the message, which indicates that the request has been declined. Because the PC 200, which receives the declining notification, displays the message included in the declining notification, the user who operates the PC 200 can be informed of declining of the request by the designated user. In the next step S25, the job received in the step S12 is stored in the HDD 116, and the process returns to the step S01.

The step S27 or the step S25 is sometimes performed before the process proceeds to the step S06, and the job received in the step S12 is sometimes stored in the HDD 116. In the step S06, whether a job, having the authentication of the user who has been authenticated in the step S01 as the activation condition, among the jobs stored in the HDD 116 is stored is determined. If such a job is stored, the CPU 111 reads out the job, and the process proceeds to the step S07. If not, the process proceeds to the step S08. In the step S07, the read job is executed, and the process proceeds to the step S08.

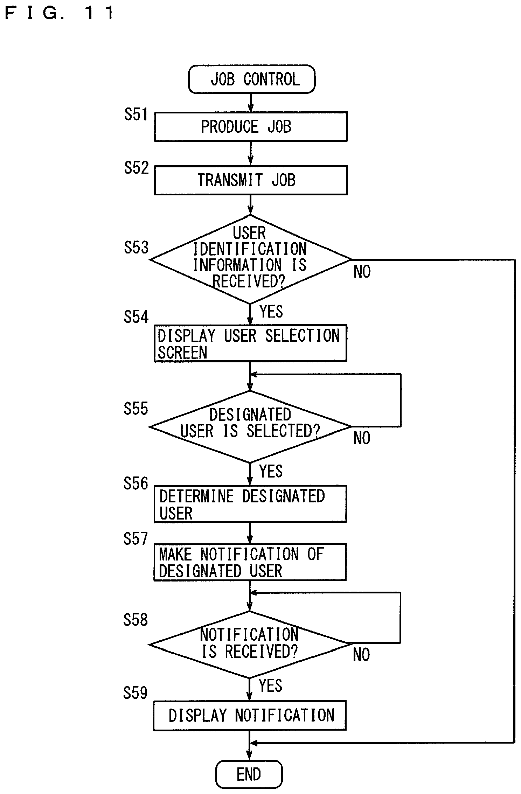

Fig. 11 is a flow chart showing one example of a flow of a job production process. The job production process is a process executed by the CPU 201 in the case where the CPU 201 included in the PC 200 executes the job production program. Referring to Fig. 11, the CPU 201 included in the PC 200 produces a job (step S51). The CPU 201 accepts the designation of the data by the user of the PC 200, a print condition and an activation condition, produces the print data for forming an image in accordance with the print condition, and produces a job including the print data, the print condition and the activation condition.

In the next step S52, the job produced in the step S51 is transmitted to a device designated by the user via the communication portion 205, and the process proceeds to the step S53. The case where the MFP 100 is designated by the user as a device that executes the job is described here as an example. In this case, the job is transmitted to the MFP 100 via the communication portion 205. In the step S53, whether the communication portion 205 has received the user identification information from the MFP 100 to which the job has been transmitted is determined. If the communication portion 205 has received the user identification information, the process proceeds to the step S54. If not, the process ends.

In the step S54, the designated user selection screen is displayed in the display unit 206, and the process proceeds to the step S55. For example, the designated user selection screen shown in Fig. 7 is displayed. In the step S55, whether the selection of the designated user has been accepted is determined. When a user selects any user identification information included in the designated user selection screen, the CPU 201 accepts the selection of the designated user. The process waits until the user selects any user identification information. If the selection of the user identification information is accepted, the process proceeds to the step S56.

In the step S56, the selected user identification information is determined as the user identification information of the designated user, and the process proceeds to the step S57. In the step S57, the MFP 100 is informed of the determined designated user. Specifically, the CPU 201 transmits the user identification information of the designated user who is selected in the step S55 to the MFP 100 via the communication portion 205. In the next step S58, whether the notification has been received is determined. The process waits until the communication portion 205 receives the acceding notification or the declining notification from the MFP 100. If the communication portion 205 receives the acceding notification or the declining notification, the process proceeds to the step S59. In the step S59, the received notification is displayed in the display unit 206, and the process ends.

### <First Modified Example>

While the MFP 100 includes the four cameras 140A to 140D provided at the four side surfaces in the above-mentioned embodiment, one camera may be provided at an upper surface of the MFP 100. The camera in the first modified example is capable of simultaneously picking up images of users who respectively stand in the vicinity of the four side surfaces of the MFP 100 by using a wide-angle lens. The user authentication portion 59 cuts out four images of the positions in the vicinity of the four side surfaces the MFP 100 among the images picked up by the camera, and analyses each of the four cut-out images, thereby authenticating the user. In the case where the user is authenticated, the position of the authenticated user is determined.

The MFP 100 in the first modified example detects the log-out of the user by analyzing the four images cut out from the image picked up by the camera. It is determined that the user, located at a position corresponding to the image from which an image of a person is no longer detected among the four cut-out images, is logged out.

### <Second Modified Example>

The MFP 100 in the second modified example authenticates a user by using an ID (Identification) card carried by the user. The MFP 100 in the second modified example is provided with card readers, which read out the authentication information recorded in the ID cards that are carried by the users, at the respective four side surfaces of the MFP 100 instead of the cameras 140A to 140D. The authentication information in the second modified example is the user identification information for identifying the user, for example. Further, the authentication information may be card identification information for identifying the cards. In this case, the MFP 100 stores a table that associates the user identification information with the card identification information in the HDD 116.

In the case where any of the four card readers respectively provided at the four side surfaces detects an ID card and reads out authentication information, if the authentication information that is the same as the read authentication information is stored in the HDD 116, the user authentication portion 59 authenticates the user specified by the authentication information. Further, in the case where authenticating the user, the user authentication portion 59 detects a position at which the card reader, which has read out the authentication information of the authenticated user, among the four card readers respectively provided at the four side surfaces is arranged as the position of the user.

In the case where reading out the authentication information of the user authenticated by the card reader, the MFP 100 in the second modified example detects the log-out of the user. Further, the MFP 100 in the second modified example may display a log-out button in each of the first personal display region 121, the second personal display region 122, the third personal display region 123 and the four personal display region 124 in the display surface of the display unit 120. Then, when the log-out button arranged in any of the first personal display region 121, the second personal display region 122, the third personal display region 123, and the fourth personal display region 124 is designated by the user, the logged-out user may be determined from the position at which the log-out button designated by the user is arranged. In the case where the log-out button arranged in the first personal display region 121 is designated, the log-out of the user who is authenticated in the vicinity of the left side surface of the MFP 100 is detected. In the case where the log-out button arranged in the second personal display region 122 is designated, the log-out of the user who is authenticated in the vicinity of the back surface of the MFP 100 is detected. In the case where the log-out button arranged in the third personal display region 123 is designated, the log-out of the user who is authenticated in the vicinity of the right side surface of the MFP 100 is detected. In the case where the log-out button arranged in the fourth personal display region 124 is designated, the log-out of the user who is authenticated in the vicinity of the front surface of the MFP 100 is detected.

### <Third Modified Example>

The MFP 100 in the third modified example authenticates the user by using a log-in screen. A user authentication portion 59 in the third modified example displays the log-in screen in each of the first personal display region 121, the second personal display region 122, the third personal display region 123, and the fourth personal display region 124 in the display surface of the display unit 120. The log-in screen is a screen for accepting authentication information. The authentication information in this case is a set of user identification information for identifying a user and a password. The user authentication portion 59 in the third modified example authenticates the user based on the authentication information that is input in any of the four log-in screens, and determines the position of the authenticated user from a position at which the log-in screen where the authentication information is input is displayed.

The user authentication portion 59 in the third modified example displays an image of a keyboard including a plurality of keys respectively corresponding to a plurality of characters and numbers in the display unit 120 together with the log-in screen. Then, when the touch panel 130 detects positions in the display surface, the user authentication portion 59 determines an operation of inputting characters or numbers corresponding to the images of the keys displayed at the detected positions, and accepts the user identification information and the password. If the authentication information of the same set as the set of the user identification information and the password accepted in any of the four log-in screens is stored in the HDD 116, the user authentication portion 59 authenticates the user specified by the user identification information.

Further, in the case where authenticating the user, the user authentication portion 59 determines a position of the user from the position at which the log-in screen where the authentication information is input is arranged. Specifically, in the case where accepting the authentication information in the log-in screen arranged in the first personal display region 121, the user authentication portion 59 determines the position of the authenticated user as a position in the vicinity of the left side surface of the MFP 100. In the case where accepting the authentication information in the log-in screen arranged in the second personal display region 122, the user authentication portion 59 determines the position of the authenticated user as a position in the vicinity of the back surface of the MFP 100. In the case where accepting the authentication information in the log-in screen arranged in the third personal display region 123, the user authentication portion 59 determines a position of the authenticated user as a position in the vicinity of the right side surface of the MFP 100. In the case where accepting the authentication information in the log-in screen arranged in the four personal display region 124, the user authentication portion 59 determines the position of the authenticated user as a position in the vicinity of the front surface of the MFP 100.

The MFP 100 in the third modified example displays the log-out button in each of the first personal display region 121, the second personal display region 122, the third personal display region 123, and the fourth personal display region 124 in the display surface of the display unit 120. When the log-out button arranged in any of the first personal display region 121, the second personal display region 122, the third personal display region 123, and the fourth personal display region 124 is designated by the user, a logged-out user is determined from a position at which the log-out button designated by the user is arranged. In the case where the log-out button arranged in the first personal display region 121 is designated, the log-out of the user who is authenticated in the vicinity of the left side surface of the MFP 100 is detected. In the case where the log-out button arranged in the second personal display region 122 is designated, the log-out of the user who is authenticated in the vicinity of the back surface of the MFP 100 is detected. In the case where the log-out button arranged in the third personal display region 123 is designated, the log-out of the user who is authenticated in the vicinity of the right side surface of the MFP 100 is detected. In the case where the log-out button arranged in the fourth personal display region 124 is designated, the log-out of the user who is authenticated in the vicinity of the front surface of the MFP 100 is detected.

### <Fourth Modified Example >

The MFP 100 in the fourth modified example authenticates a user by the short-range communication with a portable information device carried by the user. For example, the short-range communication may be the communication based on NFC (Near Field Communication) standards, or the communication based on the Bluetooth (trademark) standards.

In this case, in the case where short-range communication devices are respectively arranged at the four side surfaces of the MFP 100, when any of the four short-range communication devices becomes communicable, the CPU 111 specifies the user by authenticating the user based on the authentication information, which the communicable short-range communication device receives from the portable information device, and specifies a position of the specified user based on the position at which the communicable short-range communication device is arranged. Intra-body communication may be used instead of the short-range communication.

### <Fifth Modified Example>

Further, one short-range communication device may be arranged at the MFP 100, and proximity sensors may be respectively provided at the four side surfaces of the MFP 100. In this case, the MFP 100 specifies the user by authenticating the user based on the authentication information, which the short-range communication device receives from a communicable portable information device, and specifies the position of the user from the position at which the proximity sensor that has detected a person among the four proximity sensors is arranged.

As described above, the MFP 100 in the present embodiment functions as an image forming apparatus and authenticates the user who operates the touch panel 130. In the case where receiving a job having an activation condition from the PC 200, the MFP 100 can detect a state of the authenticated user and change the activation condition in response to the detection of a predetermined state of the authenticated user. Therefore, the MFP 100 can change the time when the job is executed. Further, even in the case where a user who operates the MFP 100 is present, the job having the activation condition can be executed early.

Further, in response to the reception of a job having an activation condition with a plurality of users authenticated, the MFP 100 transmits a plurality of pieces of user identification information for respectively identifying a plurality of users. After transmitting the plurality of pieces of user identification information, in response to reception of a response including the user identification information of the designated user selected by the user who operates the PC 200 among the plurality of users from the PC 200, the MFP 100 displays the request screen for requesting the execution of the received job. Then, in the case where accepting the response of the designated user after the request screen is displayed, the MFP 100 detects the predetermined state of the designated user. Thus, when accepting the response of the designated user selected by the user who operates the PC 200 among the plurality of users authenticated by the MFP 100, the MFP 100 detects the predetermined state. Therefore, the user who operates the PC 200 can designate the designated user who acquires a sheet of paper on which an image is formed when the job is executed. Further, the designated user can determine whether to accede to the request by the user who operates the PC 200.

Further, in the case where the activation condition is the authentication of the user who operates the PC 200, the activation condition is changed to the authentication of the designated user, who operates the MFP 100 and is designated by the user who operates the PC 200. Because the job is executed on the condition that the designated user is authenticated, even when the user who operates the PC 200 is not authenticated by the MFP 100, the job can be executed. For example, in the case where the job includes highly confidential information, the user who operates the PC 200 may designate a trustworthy user from among the plurality of users who operate the MFP 100 as the designated user. Because the designated user has been already authenticated in the MFP 100, the job can be executed early.

Further, the MFP 100 authenticates the user based on the image data output by any of the cameras 140A to 140D that picks up an image of a photographic subject. Therefore, the user is authenticated as long as being close to the four side surfaces of the MFP 100, so that it is not necessary to input an operation for authentication, and the operation can be simplified.

Further, the MFP 100 displays the log-in screen in the display unit 120 and authenticates the user who operates the MFP 100 based on the authentication information accepted by the touch panel 130. Therefore, the user is authenticated in the case where inputting the authentication information by using the touch panel 130. Thus, the user who actually operates the MFP 100 can be authenticated.

Further, in the case where the designated user, who is authenticated as the user who operates the MFP 100 and designated by the user who operates the PC 200, accedes to the request, in response to the re-authentication of the designated user, the MFP 100 executes the job having the activation condition. Therefore, after the designated user accedes to the request, the job is executed on the condition that the designated user is authenticated again, so that the designated user can determine the time when the job is executed.

Further, in the case where receiving a job having the authentication of the user who operates the PC 200 as the activation condition, before the predetermined state is detected for any of the plurality of users who operate the MFP 100, the MFP 100 executes the job in response to the authentication of the user who operates the PC 200. However, after the designated user, who is designated by the user who operates the PC 200 among the plurality of users who operate the MFP 100, accedes to the request, and the predetermined state is detected, the MFP 100 executes the job having the activation condition based on the operation accepted by the touch panel 130. Thus, the job can be executed by an instruction given by the designated user who actually operates the MFP 100. Further, because the designated user can give an instruction to execute the job, the designated user can acquire a sheet of paper on which an image is formed when the job is executed, and a user other than the designated user can be prevented from acquiring the sheet of paper on which the image is formed.

Further, after the designated user, who is designated by the user who operates the PC 200 among the plurality of users who operate the MFP 100, accedes to the request, and the predetermined state is detected, the MFP 100 executes the job having the activation condition based on the operation accepted in a region in which the log-in screen where the designated user has input the authentication information for authentication is displayed among the first personal display region 121, the second personal display region 122, the third personal display region 123, and the fourth personal display region 124. Thus, the operation by the designated user can be specified, and the job can be executed by an instruction given by the designated user. Further, because the designated user can give an instruction to execute the job, the designated user can acquire a sheet of paper on which an image is formed when the job is executed, and a user other than the designated user can be prevented from acquiring the sheet of paper on which the image is formed.

Further, after the designated user, who is designated by the user who operates the PC 200 among the plurality of users who operate the MFP 100, accedes to the request, and the predetermined state is detected, the MFP 100 executes the job having the activation condition based on an operation accepted in a region corresponding to the position of the designated user among the first personal display region 121, the second personal display region 122, the third personal display region 123, and the fourth personal display region 124. Thus, an operation by the designated user can be specified, and the job can be executed by an instruction given by the designated user. Further, because the designated user can give an instruction to execute the job, the designated user can acquire a sheet of paper on which an image is formed when the job is executed, and a user other than the designated user can be prevented from acquiring the sheet of paper on which the image is formed.

Further, after the designated user, who is designated by the user who operates the PC 200 among the plurality of users who operate the MFP 100, accedes to the request, and the predetermined state is detected, the MFP 100 in the third modified example executes the job having the activation condition based on the operation accepted in a region in which the log-in screen where the designated user has input the authentication information for authentication among the first personal display region 121, the second personal display region 122, the third personal display region 123, and the fourth personal display region 124. Thus, MFP 100 can specify the operation by the designated user and execute the job by an instruction given by the designated user. Further, because the designated user can give an instruction to execute the job, the designated user can acquire a sheet of paper on which an image is formed when the job is executed, and a user other than the designated user can be prevented from acquiring the sheet of paper on which the image is formed.

While the MFP 100 is described as one example of the image forming apparatus in the present embodiment, it is needless to say that the invention can be regarded as a print control method for allowing the MFP 100 to execute a print control process shown in Figs. 9 and 10 or a print control program that allows the CPU 111 included in the MFP 100 to perform the print control method.

Although the present invention has been described and illustrated in detail, it is clearly understood that the same is by way of illustrated and example only and is not to be taken by way of limitation, the scope of the present invention being interpreted by terms of the appended claims.

## Claims

1. An image forming apparatus (100) comprising:
an operation accepting means (130) configured to accept an operation of a user;
a user authenticating means (59) configured to authenticate the user who operates the operation accepting means (130);
a job executing means (65) configured to execute a job having an activation condition in response to satisfaction of the activation condition;
a job receiving means (61) configured to receive the job;
a state detecting means (57) configured to, in the case where the job receiving means (61) receives the job having the activation condition from an information processing apparatus, detect a state of the authenticated user;
a user notifying means (71) configured to, in response to reception of the job having the activation condition by the job receiving means (61) with a plurality of users authenticated by the user authenticating means (59), transmit a plurality of pieces of user identification information for respectively identifying the plurality of users to the information processing apparatus; and
a response accepting means (77) configured to accept a response identifying a designated user among the plurality of users, from the information processing apparatus,
wherein
the state detecting means (57) is configured to, in the case where the response of the designated user is accepted by the response accepting means, detect a predetermined state;
the image forming apparatus (100) further comprises an activation condition changing means (63) configured to, in response to detection of the predetermined state by the state detecting means (57), change the activation condition; and
the job executing means (65) is configured to, after the predetermined state is detected by the state detecting means (57), execute the job having the activation condition in response to re-authentication of the user whose predetermined state has been detected by the user authenticating means (59).

2. An image forming apparatus (100) comprising:
an operation accepting means (130) configured to accept an operation of a user;
a user authenticating means (59) configured to authenticate the user who operates the operation accepting means (130);
a job executing means (65) configured to execute a job having an activation condition in response to satisfaction of the activation condition;
a job receiving means (61) configured to receive the job;
a state detecting means (57) configured to, in the case where the job receiving means (61) receives the job having the activation condition from an information processing apparatus, detect a state of the authenticated user;
a user notifying means (71) configured to, in response to reception of the job having the activation condition by the job receiving means (61) with a plurality of users authenticated by the user authenticating means (59), transmit a plurality of pieces of user identification information for respectively identifying the plurality of users to the information processing apparatus; and
a response accepting means (77) configured to accept a response identifying a designated user among the plurality of users, from the information processing apparatus,
wherein
the state detecting means (57) is configured to, in the case where the response of the designated user is accepted by the response accepting means, detect a predetermined state;
the image forming apparatus (100) further comprises an activation condition changing means (63) configured to, in response to detection of the predetermined state by the state detecting means (57), change the activation condition;
the user authenticating means (59) is configured to detect a relative position of the authenticated user to the image forming apparatus,
the operation accepting means (130) has a plurality of acceptors, which respectively correspond to a plurality of predetermined positions relative to the image forming apparatus and are capable of accepting operations, and
the job executing means (65) is configured to, before the predetermined state is detected by the state detecting means (57), execute the job having the activation condition in response to successful authentication of the user who operates the information processing apparatus by the user authenticating means (59), and is configured to, after the predetermined state is detected by the state detecting means (57), execute the job having the activation condition based on the operation accepted by an acceptor, corresponding to a position detected at a time point at which the user whose predetermined state has been detected is authenticated by the user authenticating means (59), among the plurality of acceptors.

3. The image forming apparatus according to claim 1 or 2, wherein
the activation condition changing means (63) is configured to, in the case where the activation condition is authentication of the user who operates the information processing apparatus by the user authenticating means (59), change the activation condition to the authentication of the user whose predetermined state has been detected by the user authenticating means (59).

4. The image forming apparatus (100) according to any one of claims 1 tor 3, further comprising an image picking means (140A, 140B, 140C or 140D) configured to pick up an image of a photographic subject and output its image data, wherein
the user authenticating means (59) is configured to authenticate the user who operates the operation accepting means (130) based on the image data, of the picked-up image of the photographic subject, which is output by the image picking means (140A, 140B, 140C or 140D).

5. The image forming apparatus according to any one of claims 1 to 4, further comprising a display (120) that displays an image, and
a request screen display (75) configured to, in response to reception of a response including a piece of user identification information of the designated user selected by the user who operates the information processing apparatus among the plurality of users from the information processing apparatus after transmission of the plurality of pieces of user identification information, display a request screen for requesting execution of the received job in the display (120), wherein
the response accepting means (77) is configured to accept a response of the designated user after the request screen is displayed.

6. A print control method performed in an image forming apparatus (100) including an operation accepting means (130) configured to accept an operation of a user, comprising:
a user authentication step (SOl) of authenticating the user who operates the operation accepting means;
a job reception step (S12) of receiving a job having an activation condition;
a state detection step (S14, S17 to S20) of, in the case where the job having the activation condition is received from an information processing apparatus in the job reception step, detecting a state of the authenticated user;
a user notification step (S15) of, in response to reception of the job having the activation condition in the job reception step with a plurality of users authenticated in the user authentication step, transmitting a plurality of pieces of user identification information for respectively identifying the plurality of users to the information processing apparatus;
a response acceptance step (S16) of accepting a response identifying a designated user among the plurality of users, from the information processing apparatus;
the state detection step further including, in the case where the response of the designated user is accepted in the response acceptance step, detecting (S17 to S20) the predetermined state;
an activation condition changing step (S21) of, in response to detection of a predetermined state in the state detection step (S14, S17 to S20), changing the activation condition; and
after detecting the predetermined state, a job execution step (S23) of executing the job having the activation condition in response to re-authentication of the user whose predetermined state has been detected.

7. A print control method performed in an image forming apparatus (100) including an operation accepting means (130) configured to accept an operation of a user, comprising:
a user authentication step (SOl) of authenticating the user who operates the operation accepting means;
a job reception step (S12) of receiving a job having an activation condition;
a state detection step (S14, S17 to S20) of, in the case where the job having the activation condition is received from an information processing apparatus in the job reception step, detecting a state of the authenticated user;
a user notification step (S15) of, in response to reception of the job having the activation condition in the job reception step with a plurality of users authenticated in the user authentication step, transmitting a plurality of pieces of user identification information for respectively identifying the plurality of users to the information processing apparatus;
a response acceptance step (S16) of accepting a response identifying a designated user among the plurality of users, from the information processing apparatus;
the state detection step further including, in the case where the response of the designated user is accepted in the response acceptance step, detecting (S17 to S20) the predetermined state, wherein a relative position of the authenticated user to the image forming apparatus is detected;
an activation condition changing step (S21) of, in response to detection of a predetermined state in the state detection step (S14, S17 to S20), changing the activation condition; and
a job executing step (S06; S23) of:
before the predetermined state is detected, executing the job in response to successful authentication of the user who operates the information processing apparatus by the user authenticating means; or
after the predetermined state is detected, executing the job having the activation condition based on the operation accepted by an acceptor, corresponding to a position detected at a time point at which the user whose predetermined state has been detected is authenticated, among a plurality of acceptors of the operation accepting means which respectively correspond to a plurality of predetermined positions relative to the image forming apparatus and are capable of accepting operations.

8. A computer-readable recording medium encoded with a print control program executed by a computer (111), which controls an image forming apparatus (100) including an operation accepting means (130) that accepts an operation of a user, wherein the print control program, when executed by the computer, causes the computer (111) to perform:
a user authentication step (SOl) of authenticating the user who operates the operation acceptor;
a job reception step (S12) of receiving a job having an activation condition;
a state detection step (S14, S17 to S20) of, in the case where the job having the activation condition is received from an information processing apparatus in the job reception step (S12), detecting a state of the authenticated user;
a user notification step (S15) of, in response to reception of the job having the activation condition in the job reception step with a plurality of users authenticated in the user authentication step, transmitting a plurality of pieces of user identification information for respectively identifying the plurality of users to the information processing apparatus;
a response acceptance step (S16) of accepting a response identifying a designated user among the plurality of users, from the information processing apparatus;
the state detection step further including, in the case where the response of the designated user is accepted in the response acceptance step, detecting (S17 to S20) the predetermined state;
an activation condition changing step (S21) of, in response to detection of a predetermined state in the state detection step (S14, S17 to S20), changing the activation condition; and
after detecting the predetermined state, a job execution step (S23) of executing the job having the activation condition in response to re-authentication of the user whose predetermined state has been detected.

9. A computer-readable recording medium encoded with a print control program executed by a computer (111), which controls an image forming apparatus (100) including an operation accepting means (130) that accepts an operation of a user, wherein the print control program, when executed by the computer, causes the computer (111) to perform:
a user authentication step (SOl) of authenticating the user who operates the operation acceptor;
a job reception step (S12) of receiving a job having an activation condition;
a state detection step (S14, S17 to S20) of, in the case where the job having the activation condition is received from an information processing apparatus in the job reception step (S12), detecting a state of the authenticated user;
a user notification step (S15) of, in response to reception of the job having the activation condition in the job reception step with a plurality of users authenticated in the user authentication step, transmitting a plurality of pieces of user identification information for respectively identifying the plurality of users to the information processing apparatus;
a response acceptance step (S16) of accepting a response identifying a designated user among the plurality of users, from the information processing apparatus;
the state detection step further including, in the case where the response of the designated user is accepted in the response acceptance step, detecting (S17 to S20) the predetermined state, wherein a relative position of the authenticated user to the image forming apparatus is detected;
an activation condition changing step (S21) of, in response to detection of a predetermined state in the state detection step (S14, S17 to S20), changing the activation condition; and
a job executing step (S06; S23) of:
before the predetermined state is detected, executing the job in response to successful authentication of the user who operates the information processing apparatus by the user authenticating means; or
after the predetermined state is detected, executing the job having the activation condition based on the operation accepted by an acceptor, corresponding to a position detected at a time point at which the user whose predetermined state has been detected is authenticated, among a plurality of acceptors of the operation accepting means which respectively correspond to a plurality of predetermined positions relative to the image forming apparatus and are capable of accepting operations.

## Patentansprüche

1. Bilderzeugungseinrichtung (100), umfassend:
ein Bedienungsannahmemittel (130), das so konfiguriert ist, dass es eine Bedienung eines Benutzers annimmt;
ein Benutzerauthentifizierungsmittel (59), das so konfiguriert ist, dass es den Benutzer authentifiziert, der das Bedienungsannahmemittel (130) bedient;
ein Auftragsausführungsmittel (65), das so konfiguriert ist, dass es einen Auftrag, der eine Aktivierungsbedingung aufweist, als Antwort auf die Erfüllung der Aktivierungsbedingung ausführt;
ein Auftragsempfangsmittel (61), das zum Empfang des Auftrags konfiguriert ist;
ein Zustandserfassungsmittel (57), das so konfiguriert ist, dass es in dem Fall, in dem das Auftragsempfangsmittel (61) den Auftrag, der die Aktivierungsbedingung aufweist, von einer Informationsverarbeitungseinrichtung empfängt, einen Zustand des authentifizierten Benutzers erfasst;
ein Benutzerbenachrichtigungsmittel (71), das so konfiguriert ist, dass es als Reaktion auf den Empfang des Auftrags, der die Aktivierungsbedingung aufweist, durch das Auftragsempfangsmittel (61) mit einer Vielzahl von Benutzern, die durch das Benutzerauthentifizierungsmittel (59) authentifiziert wurden, eine Vielzahl von Benutzeridentifikationsinformationen zum jeweiligen Identifizieren der Vielzahl von Benutzern an die Informationsverarbeitungseinrichtung überträgt; und
ein Antwortannahmemittel (77), das so konfiguriert ist, dass es eine Antwort, die einen designierten Benutzer aus der Vielzahl von Benutzern identifiziert, von der Informationsverarbeitungseinrichtung annimmt,
wobei
das Zustandserfassungsmittel (57) so konfiguriert ist, dass es in dem Fall, in dem die Antwort des designierten Benutzers von dem Antwortannahmemittel angenommen wird, einen vorbestimmten Zustand erfasst;
die Bilderzeugungseinrichtung (100) weiter ein Aktivierungsbedingungs-Änderungsmittel (63) umfasst, das so konfiguriert ist, dass es als Antwort auf die Erfassung des vorbestimmten Zustands durch das Zustandserfassungsmittel (57) die Aktivierungsbedingung ändert; und
das Auftragsausführungsmittel (65) so konfiguriert ist, dass es, nachdem der vorbestimmte Zustand durch das Zustandserfassungsmittel (57) erfasst wurde, den Auftrag, der die Aktivierungsbedingung aufweist, als Antwort auf die erneute Authentifizierung des Benutzers ausführt, dessen vorbestimmter Zustand durch das Benutzerauthentifizierungsmittel (59) erfasst wurde.

2. Bilderzeugungseinrichtung (100), umfassend:
ein Bedienungsannahmemittel (130), das so konfiguriert ist, dass es eine Bedienung eines Benutzers annimmt;
ein Benutzerauthentifizierungsmittel (59), das so konfiguriert ist, dass es den Benutzer authentifiziert, der das Bedienungsannahmemittel (130) bedient;
ein Auftragsausführungsmittel (65), das so konfiguriert ist, dass es einen Auftrag, der eine Aktivierungsbedingung aufweist, als Antwort auf die Erfüllung der Aktivierungsbedingung ausführt;
ein Auftragsempfangsmittel (61), das zum Empfang des Auftrags konfiguriert ist;
ein Zustandserfassungsmittel (57), das so konfiguriert ist, dass es in dem Fall, in dem das Auftragsempfangsmittel (61) den Auftrag, der die Aktivierungsbedingung aufweist, von einer Informationsverarbeitungseinrichtung empfängt, einen Zustand des authentifizierten Benutzers erfasst;
ein Benutzerbenachrichtigungsmittel (71), das so konfiguriert ist, dass es als Antwort auf den Empfang des Auftrags, der die Aktivierungsbedingung aufweist, durch das Auftragsempfangsmittel (61) mit einer Vielzahl von Benutzern, die durch das Benutzerauthentifizierungsmittel (59) authentifiziert wurden, eine Vielzahl von Benutzeridentifikationsinformationen zum jeweiligen Identifizieren der Vielzahl von Benutzern an die Informationsverarbeitungseinrichtung überträgt; und
ein Antwortannahmemittel (77), das so konfiguriert ist, dass es eine Antwort, die einen designierten Benutzer aus der Vielzahl von Benutzern identifiziert, von der Informationsverarbeitungseinrichtung annimmt,
wobei
das Zustandserfassungsmittel (57) so konfiguriert ist, dass es in dem Fall, in dem die Antwort des designierten Benutzers von dem Antwortannahmemittel angenommen wird, einen vorbestimmten Zustand erfasst;
die Bilderzeugungseinrichtung (100) weiter ein Aktivierungsbedingungs-Änderungsmittel (63) umfasst, das so konfiguriert ist, dass es als Antwort auf die Erfassung des vorbestimmten Zustands durch das Zustandserfassungsmittel (57) die Aktivierungsbedingung ändert;
das Benutzerauthentifizierungsmittel (59) so konfiguriert ist, dass sie eine relative Position des authentifizierten Benutzers zu der Bilderzeugungseinrichtung erfasst,
das Bedienungsannahmemittel (130) eine Vielzahl von Annehmern aufweist, die jeweils einer Vielzahl von vorbestimmten Positionen relativ zu der Bilderzeugungseinrichtung entsprechen und in der Lage sind, Bedienungen anzunehmen, und
das Auftragsausführungsmittel (65) so konfiguriert ist, dass es, bevor der vorbestimmte Zustand durch das Zustandserfassungsmittel (57) erfasst wird, den Auftrag, der die Aktivierungsbedingung aufweist, als Antwort auf eine erfolgreiche Authentifizierung des Benutzers, der die Informationsverarbeitungseinrichtung bedient, durch die Benutzerauthentifizierungseinrichtung (59) ausführt, und so konfiguriert ist, dass es, nachdem der vorbestimmte Zustand durch das Zustandserfassungsmittel (57) erfasst worden ist, den Auftrag, der die Aktivierungsbedingung aufweist, auf der Grundlage der von einem Annehmer angenommenen Bedienung ausführt, die einer Position entspricht, die zu einem Zeitpunkt erfasst wird, zu dem der Benutzer, dessen vorbestimmter Zustand erfasst worden ist, durch das Benutzerauthentifizierungsmittel (59) authentifiziert wird, unter der Vielzahl von Annehmern.

3. Bilderzeugungseinrichtung nach Anspruch 1 oder 2, wobei
das Aktivierungsbedingungs-Änderungsmittel (63) so konfiguriert ist, dass es in dem Fall, in dem die Aktivierungsbedingung die Authentifizierung des Benutzers ist, der die Informationsverarbeitungseinrichtung durch das Benutzerauthentifizierungsmittel (59) bedient, die Aktivierungsbedingung auf die Authentifizierung des Benutzers ändert, dessen vorbestimmter Zustand durch das Benutzerauthentifizierungsmittel (59) erfasst worden ist.

4. Bilderzeugungseinrichtung (100) nach einem der Ansprüche 1 bis 3, weiter umfassend ein Bildaufnahmemittel (140A, 140B, 140C oder 140D), das so konfiguriert ist, dass es ein Bild eines fotografischen Motivs aufnimmt und dessen Bilddaten ausgibt, wobei
das Benutzerauthentifizierungsmittel (59) so konfiguriert ist, dass es den Benutzer, der das Bedienungsannahmemittel (130) bedient, auf der Grundlage der Bilddaten des aufgenommenen Bildes des fotografischen Motivs, das von dem Bildaufnahmemittel (140A, 140B, 140C oder 140D) ausgegeben wird, authentifiziert.

5. Bilderzeugungseinrichtung nach einem der Ansprüche 1 bis 4, weiter umfassend eine Anzeige (120), die ein Bild anzeigt, und
eine Anforderungsbildschirmanzeige (75), die so konfiguriert ist, dass sie als Reaktion auf den Empfang einer Antwort, die eine Benutzeridentifikationsinformation des designierten Benutzers einschließt, der von dem Benutzer, der die Informationsverarbeitungseinrichtung bedient, aus der Vielzahl von Benutzern ausgewählt wurde, von der Informationsverarbeitungseinrichtung nach der Übertragung der Vielzahl von Benutzeridentifikationsinformationen einen Anforderungsbildschirm anzeigt, um die Ausführung des empfangenen Auftrags auf der Anzeige (120) anzufordern, wobei
das Antwortannahmemittel (77) so konfiguriert ist, dass es eine Antwort des designierten Benutzers annimmt, nachdem der Anforderungsbildschirm angezeigt ist.

6. Drucksteuerverfahren, das in einer Bilderzeugungseinrichtung (100) durchgeführt wird, die ein Bedienungsannahmemittel (130) einschließt, das so konfiguriert ist, dass es eine Bedienung eines Benutzers annimmt, umfassend:
einen Benutzerauthentifizierungsschritt (S01) zum Authentifizieren des Benutzers, der das Bedienungsannahmemittel bedient;
einen Auftragsempfangsschritt (S12) zum Empfangen eines Auftrags, der eine Aktivierungsbedingung aufweist;
einen Zustandserfassungsschritt (S14, S17 bis S20) zum Erfassen eines Zustands des authentifizierten Benutzers in dem Fall, in dem der Auftrag, der die Aktivierungsbedingung aufweist, von einer Informationsverarbeitungseinrichtung in dem Auftragsempfangsschritt empfangen wird;
einen Benutzerbenachrichtigungsschritt (S15) zum Übertragen einer Vielzahl von Benutzeridentifikationsinformationen zum jeweiligen Identifizieren der Vielzahl von Benutzern an die Informationsverarbeitungseinrichtung als Reaktion auf den Empfang des Auftrags, der die Aktivierungsbedingung aufweist, im Auftragsempfangsschritt mit einer Vielzahl von in dem Benutzerauthentifizierungsschritt authentifizierten Benutzern;
einen Antwortannahmeschritt (S16) zum Annehmen einer Antwort, die einen designierten Benutzer aus der Vielzahl von Benutzern identifiziert, von der Informationsverarbeitungseinrichtung;
wobei der Zustandserfassungsschritt weiter in dem Fall, dass die Antwort des designierten Benutzers in dem Antwortannahmeschritt angenommen wird, das Erfassen (S17 bis S20) des vorbestimmten Zustands einschließt;
einen Aktivierungsbedingungs-Änderungsschritt (S21), bei dem als Antwort auf die Erfassung eines vorbestimmten Zustands in dem Zustandserfassungsschritt (S14, S17 bis S20) die Aktivierungsbedingung geändert wird; und
nach dem Erfassen des vorbestimmten Zustands, einen Auftragsausführungsschritt (S23) zum Ausführens des Auftrags, der die Aktivierungsbedingung aufweist, als Reaktion auf die erneute Authentifizierung des Benutzers, dessen vorbestimmter Zustand erfasst worden ist.

7. Drucksteuerverfahren, das in einer Bilderzeugungseinrichtung (100) durchgeführt wird, die ein Bedienungsannahmemittel (130) einschließt, das so konfiguriert ist, dass es eine Bedienung eines Benutzers annimmt, umfassend:
einen Benutzerauthentifizierungsschritt (S01) zum Authentifizieren des Benutzers, der das Bedienungsannahmemittel bedient;
einen Auftragsempfangsschritt (S12) zum Empfangen eines Auftrags, der eine Aktivierungsbedingung aufweist;
einen Zustandserfassungsschritt (S14, S17 bis S20) zum Erfassen eines Zustands des authentifizierten Benutzers in dem Fall, in dem der Auftrag, der die Aktivierungsbedingung aufweist, von einer Informationsverarbeitungseinrichtung in dem Auftragsempfangsschritt empfangen wird;
einen Benutzerbenachrichtigungsschritt (S15) zum Übertragen einer Vielzahl von Benutzeridentifikationsinformationen zum jeweiligen Identifizieren der Vielzahl von Benutzern an die Informationsverarbeitungseinrichtung als Reaktion auf den Empfang des Auftrags, der die Aktivierungsbedingung aufweist, im Auftragsempfangsschritt mit einer Vielzahl von in dem Benutzerauthentifizierungsschritt authentifizierten Benutzern;
einen Antwortannahmeschritt (S16) zum Annehmen einer Antwort, die einen designierten Benutzer aus der Vielzahl von Benutzern identifiziert, von der Informationsverarbeitungseinrichtung;
wobei der Zustandserfassungsschritt weiter in dem Fall, dass die Antwort des designierten Benutzers in dem Antwortannahmeschritt angenommen wird, das Erfassen (S17 bis S20) des vorbestimmten Zustands einschließt, wobei eine relative Position des authentifizierten Benutzers zu der Bilderzeugungseinrichtung erfasst wird;
einen Aktivierungsbedingungs-Änderungsschritt (S21), bei dem als Reaktion auf die Erfassung eines vorbestimmten Zustands in dem Zustandserfassungsschritt (S14, S17 bis S20) die Aktivierungsbedingung geändert wird; und
einen Auftragsausführungsschritt (S06; S23) zum:
Ausführen des Auftrags als Reaktion auf eine erfolgreiche Authentifizierung des Benutzers, der die Informationsverarbeitungseinrichtung bedient, durch die Benutzerauthentifizierungseinrichtung, bevor der vorbestimmte Zustand erfasst wird; oder
Ausführen des Auftrags, der die Aktivierungsbedingung aufweist, auf der Grundlage der von einem Annehmer angenommenen Bedienung, die einer Position entspricht, die zu einem Zeitpunkt erfasst wird, zu dem der Benutzer, dessen vorbestimmter Zustand erfasst worden ist, authentifiziert wird, unter einer Vielzahl von Annehmern der Bedienungsannahmemittel, die jeweils einer Vielzahl von vorbestimmten Positionen in Bezug auf die Bilderzeugungseinrichtung entsprechen und in der Lage sind, Bedienungen anzunehmen, nachdem der vorbestimmte Zustand erfasst ist.

8. Computerlesbares Aufzeichnungsmedium, das mit einem Drucksteuerprogramm codiert ist, das von einem Computer (111) ausgeführt wird, der eine Bilderzeugungseinrichtung (100) steuert, die ein Bedienungsannahmemittel (130) enthält, das eine Bedienung eines Benutzers annimmt, wobei das Drucksteuerprogramm, wenn es von dem Computer ausgeführt wird, den Computer (111) veranlasst, Folgendes durchzuführen:
einen Benutzerauthentifizierungsschritt (S01) zum Authentifizieren des Benutzers, der den Bedienungsannehmer bedient;
einen Auftragsempfangsschritt (S12) zum Empfangen eines Auftrags, der eine Aktivierungsbedingung aufweist;
einen Zustandserfassungsschritt (S14, S17 bis S20) zum Erfassen eines Zustands des authentifizierten Benutzers in dem Fall, in dem der Auftrag, der die Aktivierungsbedingung aufweist, von einer Informationsverarbeitungseinrichtung in dem Auftragsempfangsschritt (S12) empfangen wird;
einen Benutzerbenachrichtigungsschritt (S15) zum Übertragen einer Vielzahl von Benutzeridentifikationsinformationen zum jeweiligen Identifizieren der Vielzahl von Benutzern an die Informationsverarbeitungseinrichtung als Reaktion auf den Empfang des Auftrags, der die Aktivierungsbedingung aufweist, im Auftragsempfangsschritt mit einer Vielzahl von in dem Benutzerauthentifizierungsschritt authentifizierten Benutzern;
einen Antwortannahmeschritt (S16) zum Annehmen einer Antwort, die einen designierten Benutzer aus der Vielzahl von Benutzern identifiziert, von der Informationsverarbeitungseinrichtung;
wobei der Zustandserkennungsschritt weiter in dem Fall, dass die Antwort des designierten Benutzers in dem Antwortannahmeschritt angenommen wird, das Erfassen (S17 bis S20) des vorbestimmten Zustands einschließt;
einen Aktivierungsbedingungs-Änderungsschritt (S21), bei dem als Reaktion auf die Erfassung eines vorbestimmten Zustands in dem Zustandserfassungsschritt (S14, S17 bis S20) die Aktivierungsbedingung geändert wird; und
nach dem Erfassen des vorbestimmten Zustands, einen Auftragsausführungsschritt (S23) zum Ausführens des Auftrags, der die Aktivierungsbedingung aufweist, als Reaktion auf die erneute Authentifizierung des Benutzers, dessen vorbestimmter Zustand erfasst worden ist.

9. Computerlesbares Aufzeichnungsmedium, das mit einem Drucksteuerprogramm codiert ist, das von einem Computer (111) ausgeführt wird, der eine Bilderzeugungseinrichtung (100) steuert, die ein Bedienungsannahmemittel (130) enthält, das eine Bedienung eines Benutzers annimmt, wobei das Drucksteuerprogramm, wenn es von dem Computer ausgeführt wird, den Computer (111) veranlasst, Folgendes durchzuführen:
einen Benutzerauthentifizierungsschritt (S01) zum Authentifizieren des Benutzers, der den Bedienungsannehmer bedient;
einen Auftragsempfangsschritt (S12) zum Empfangen eines Auftrags, der eine Aktivierungsbedingung aufweist;
einen Zustandserfassungsschritt (S14, S17 bis S20) zum Erfassen eines Zustands des authentifizierten Benutzers in dem Fall, in dem der Auftrag, der die Aktivierungsbedingung aufweist, von einer Informationsverarbeitungseinrichtung in dem Auftragsempfangsschritt (S12) empfangen wird;
einen Benutzerbenachrichtigungsschritt (S15), bei dem als Reaktion auf den Empfang des Auftrags, der die Aktivierungsbedingung aufweist, in dem Auftragsempfangsschritt mit einer Vielzahl von in dem Benutzerauthentifizierungsschritt authentifizierten Benutzern eine Vielzahl von Benutzeridentifikationsinformationen zum jeweiligen Identifizieren der Vielzahl von Benutzern an die Informationsverarbeitungseinrichtung übertragen wird;
einen Antwortannahmeschritt (S16) zum Annehmen einer Antwort, die einen designierten Benutzer aus der Vielzahl von Benutzern identifiziert, von der Informationsverarbeitungseinrichtung;
wobei der Zustandserfassungsschritt weiter in dem Fall, dass die Antwort des designierten Benutzers in dem Antwortannahmeschritt angenommen wird, das Erfassen (S17 bis S20) des vorbestimmten Zustands einschließt, wobei eine relative Position des authentifizierten Benutzers zu der Bilderzeugungseinrichtung erfasst wird;
einen Aktivierungsbedingungs-Änderungsschritt (S21), bei dem als Reaktion auf die Erfassung eines vorbestimmten Zustands in dem Zustandserfassungsschritt (S14, S17 bis S20) die Aktivierungsbedingung geändert wird; und
einen Auftragsausführungsschritt (S06; S23) zum:
Ausführen des Auftrags als Reaktion auf eine erfolgreiche Authentifizierung des Benutzers, der die Informationsverarbeitungseinrichtung bedient, durch die Benutzerauthentifizierungseinrichtung, bevor der vorbestimmte Zustand erfasst wird; oder
Ausführen des Auftrags, der die Aktivierungsbedingung aufweist, auf der Grundlage der von einem Annehmer angenommenen Bedienung, die einer Position entspricht, die zu einem Zeitpunkt erfasst wird, zu dem der Benutzer, dessen vorbestimmter Zustand erfasst worden ist, authentifiziert wird, unter einer Vielzahl von Annehmern der Bedienungsannahmemittel, die jeweils einer Vielzahl von vorbestimmten Positionen in Bezug auf die Bilderzeugungseinrichtung entsprechen und in der Lage sind, Bedienungen anzunehmen, nachdem der vorbestimmte Zustand erfasst ist.

## Revendications

1. Appareil de formation d'image (100) comprenant :
des moyens d'acceptation d'opération (130) configurés pour accepter une opération d'un utilisateur ;
des moyens d'authentification d'utilisateur (59) configurés pour authentifier l'utilisateur qui fait fonctionner les moyens d'acceptation d'opération (130) ;
des moyens d'exécution de tâche (65) configurés pour exécuter une tâche présentant une condition d'activation en réponse à une satisfaction de la condition d'activation ;
des moyens de réception de tâche (61) configurés pour recevoir la tâche ;
des moyens de détection d'état (57) configurés pour, dans le cas où les moyens de réception de tâche (61) reçoivent la tâche présentant la condition d'activation à partir d'un appareil de traitement d'informations, détecter un état de l'utilisateur authentifié ;
des moyens de notification d'utilisateur (71) configurés pour, en réponse à la réception de la tâche présentant la condition d'activation par les moyens de réception de tâche (61) avec une pluralité d'utilisateurs authentifiés par les moyens d'authentification d'utilisateur (59), transmettre à l'appareil de traitement d'informations une pluralité d'éléments d'informations d'identification d'utilisateur pour identifier respectivement la pluralité d'utilisateurs ; et
des moyens d'acceptation de réponse (77) configurés pour accepter une réponse identifiant un utilisateur désigné parmi la pluralité d'utilisateurs, à partir de l'appareil de traitement d'informations,
dans lequel
les moyens de détection d'état (57) sont configurés pour, dans le cas où la réponse de l'utilisateur désigné est acceptée par les moyens d'acceptation de réponse, détecter un état prédéterminé ;
l'appareil de formation d'image (100) comprend en outre des moyens de changement de condition d'activation (63) configurés pour, en réponse à une détection de l'état prédéterminé par les moyens de détection d'état (57), changer la condition d'activation ; et
les moyens d'exécution de tâche (65) sont configurés pour, après que l'état prédéterminé a été détecté par les moyens de détection d'état (57), exécuter la tâche présentant la condition d'activation en réponse à une réauthentification de l'utilisateur dont un état prédéterminé a été détecté par les moyens d'authentification d'utilisateur (59).

2. Appareil de formation d'image (100) comprenant :
des moyens d'acceptation d'opération (130) configurés pour accepter une opération d'un utilisateur ;
des moyens d'authentification d'utilisateur (59) configurés pour authentifier l'utilisateur qui fait fonctionner les moyens d'acceptation d'opération (130) ;
des moyens d'exécution de tâche (65) configurés pour exécuter une tâche présentant une condition d'activation en réponse à une satisfaction de la condition d'activation ;
des moyens de réception de tâche (61) configurés pour recevoir la tâche ;
des moyens de détection d'état (57) configurés pour, dans le cas où les moyens de réception de tâche (61) reçoivent la tâche présentant la condition d'activation à partir d'un appareil de traitement d'informations, détecter un état de l'utilisateur authentifié ;
des moyens de notification d'utilisateur (71) configurés pour, en réponse à une réception de la tâche présentant la condition d'activation par les moyens de réception de tâche (61) avec une pluralité d'utilisateurs authentifiés par les moyens d'authentification d'utilisateur (59), transmettre une pluralité d'éléments d'informations d'identification d'utilisateur pour identifier respectivement la pluralité d'utilisateurs à l'appareil de traitement d'informations ; et
des moyens d'acceptation de réponse (77) configurés pour accepter une réponse identifiant un utilisateur désigné parmi la pluralité d'utilisateurs, à partir de l'appareil de traitement d'informations,
dans lequel
les moyens de détection d'état (57) sont configurés pour, dans le cas où la réponse de l'utilisateur désigné est acceptée par les moyens d'acceptation de réponse, détecter un état prédéterminé ;
l'appareil de formation d'image (100) comprend en outre des moyens de changement de condition d'activation (63) configurés pour, en réponse à une détection de l'état prédéterminé par les moyens de détection d'état (57), changer la condition d'activation ;
les moyens d'authentification d'utilisateur (59) sont configurés pour détecter une position relative de l'utilisateur authentifié par rapport à l'appareil de formation d'image,
les moyens d'acceptation d'opération (130) présentent une pluralité d'accepteurs, qui correspondent respectivement à une pluralité de positions prédéterminées par rapport à l'appareil de formation d'image et sont capables d'accepter des opérations, et
les moyens d'exécution de tâche (65) sont configurés pour, avant que l'état prédéterminé ne soit détecté par les moyens de détection d'état (57), exécuter la tâche présentant la condition d'activation en réponse à une authentification réussie de l'utilisateur qui fait fonctionner l'appareil de traitement d'informations par les moyens d'authentification d'utilisateur (59), et sont configurés pour, après que l'état prédéterminé a été détecté par les moyens de détection d'état (57), exécuter la tâche présentant la condition d'activation sur la base de l'opération acceptée par un accepteur, correspondant à une position détectée à un moment auquel l'utilisateur dont un état prédéterminé a été détecté est authentifié par les moyens d'authentification d'utilisateur (59), parmi la pluralité d'accepteurs.

3. Appareil de formation d'image selon la revendication 1 ou 2, dans lequel
les moyens de changement de condition d'activation (63) sont configurés pour, dans le cas où la condition d'activation est une authentification de l'utilisateur qui fait fonctionner l'appareil de traitement d'informations par les moyens d'authentification d'utilisateur (59), changer la condition d'activation en une authentification de l'utilisateur dont un état prédéterminé a été détecté par les moyens d'authentification d'utilisateur (59).

4. Appareil de formation d'image (100) selon l'une quelconque des revendications 1 à 3, comprenant en outre des moyens de prise d'image (140A, 140B, 140C ou 140D) configurés pour capturer une image d'un sujet photographique et délivrer en sortie ses données d'image, dans lequel
les moyens d'authentification d'utilisateur (59) sont configurés pour authentifier l'utilisateur qui fait fonctionner les moyens d'acceptation d'opération (130) sur la base des données d'image, de l'image capturée du sujet photographique, qui est délivrée en sortie par les moyens de prise d'image (140A, 140B, 140C ou 140D).

5. Appareil de formation d'image selon l'une quelconque des revendications 1 à 4, comprenant en outre un affichage (120) qui affiche une image, et
un affichage d'écran de demande (75) configuré pour, en réponse à une réception d'une réponse incluant un élément d'informations d'identification d'utilisateur de l'utilisateur désigné sélectionné par l'utilisateur qui fait fonctionner l'appareil de traitement d'informations parmi la pluralité d'utilisateurs à partir de l'appareil de traitement d'informations après une transmission de la pluralité d'éléments d'informations d'identification d'utilisateur, afficher un écran de demande pour demander une exécution de la tâche reçue dans l'affichage (120), dans lequel
les moyens d'acceptation de réponse (77) sont configurés pour accepter une réponse de l'utilisateur désigné après que l'écran de demande a été affiché.

6. Procédé de commande d'impression exécuté dans un appareil de formation d'image (100) incluant des moyens d'acceptation d'opération (130) configurés pour accepter une opération d'un utilisateur, comprenant :
une étape d'authentification d'utilisateur (S01) consistant à authentifier l'utilisateur qui fait fonctionner les moyens d'acceptation d'opération ;
une étape de réception de tâche (S12) consistant à recevoir une tâche présentant une condition d'activation ;
une étape de détection d'état (S14, S17 à S20) consistant à, dans le cas où la tâche présentant la condition d'activation est reçue d'un appareil de traitement d'informations dans l'étape de réception de tâche, détecter un état de l'utilisateur authentifié ;
une étape de notification d'utilisateur (S15) consistant à, en réponse à une réception de la tâche présentant la condition d'activation dans l'étape de réception de tâche avec une pluralité d'utilisateurs authentifiés dans l'étape d'authentification d'utilisateur, transmettre à l'appareil de traitement d'informations une pluralité d'éléments d'informations d'identification d'utilisateur pour identifier respectivement la pluralité d'utilisateurs ;
une étape d'acceptation de réponse (S16) consistant à accepter une réponse identifiant un utilisateur désigné parmi la pluralité d'utilisateurs, à partir de l'appareil de traitement d'informations ;
l'étape de détection d'état incluant en outre, dans le cas où une réponse de l'utilisateur désigné est acceptée dans l'étape d'acceptation de réponse, une détection (S17 à S20) de l'état prédéterminé ;
une étape de changement de condition d'activation (S21), en réponse à une détection d'un état prédéterminé dans l'étape de détection d'état (S14, S17 à S20), consistant à changer la condition d'activation ; et
après détection de l'état prédéterminé, une étape d'exécution de tâche (S23) consistant à exécuter la tâche présentant la condition d'activation en réponse à une réauthentification de l'utilisateur dont un état prédéterminé a été détecté.

7. Procédé de commande d'impression exécuté dans un appareil de formation d'image (100) incluant des moyens d'acceptation d'opération (130) configurés pour accepter une opération d'un utilisateur, comprenant :
une étape d'authentification d'utilisateur (S01) consistant à authentifier l'utilisateur qui fait fonctionner les moyens d'acceptation d'opération ;
une étape de réception de tâche (S12) consistant à recevoir une tâche présentant une condition d'activation ;
une étape de détection d'état (S14, S17 à S20) consistant à, dans le cas où la tâche présentant la condition d'activation est reçue d'un appareil de traitement d'informations dans l'étape de réception de tâche, détecter un état de l'utilisateur authentifié ;
une étape de notification d'utilisateur (S15) consistant à, en réponse à une réception de la tâche présentant la condition d'activation dans l'étape de réception de tâche avec une pluralité d'utilisateurs authentifiés dans l'étape d'authentification d'utilisateur, transmettre à l'appareil de traitement d'informations une pluralité d'éléments d'informations d'identification d'utilisateur pour identifier respectivement la pluralité d'utilisateurs ;
une étape d'acceptation de réponse (S16) consistant à accepter une réponse identifiant un utilisateur désigné parmi la pluralité d'utilisateurs, à partir de l'appareil de traitement d'informations ;
l'étape de détection d'état incluant en outre, dans le cas où la réponse de l'utilisateur désigné est acceptée dans l'étape d'acceptation de réponse, une détection (S17 à S20) de l'état prédéterminé, dans lequel une position relative de l'utilisateur authentifié par rapport à l'appareil de formation d'image est détectée ;
une étape de changement de condition d'activation (S21), en réponse à une détection d'un état prédéterminé dans l'étape de détection d'état (S14, S17 à S20), consistant à changer la condition d'activation ; et
une étape d'exécution de tâche (S06 ; S23) consistant à :
avant que l'état prédéterminé ne soit détecté, exécuter la tâche en réponse à une authentification réussie de l'utilisateur qui fait fonctionner l'appareil de traitement d'informations par les moyens d'authentification d'utilisateur ; ou
après détection de l'état prédéterminé, exécuter la tâche présentant la condition d'activation sur la base de l'opération acceptée par un accepteur, correspondant à une position détectée à un instant auquel l'utilisateur dont un état prédéterminé a été détecté est authentifié, parmi une pluralité d'accepteurs des moyens d'acceptation d'opération qui correspondent respectivement à une pluralité de positions prédéterminées par rapport à l'appareil de formation d'image et sont capables d'accepter des opérations.

8. Support d'enregistrement lisible par ordinateur codé avec un programme de commande d'impression exécuté par un ordinateur (111), qui commande un appareil de formation d'image (100) incluant des moyens d'acceptation d'opération (130) acceptant une opération d'un utilisateur, dans lequel le programme de commande d'impression, lorsqu'il est exécuté par l'ordinateur, amène l'ordinateur (111) à effectuer :
une étape d'authentification d'utilisateur (S01) consistant à authentifier l'utilisateur qui fait fonctionner les moyens d'acceptation d'opération ;
une étape de réception de tâche (S12) consistant à recevoir une tâche présentant une condition d'activation ;
une étape de détection d'état (S14, S17 à S20) consistant à, dans le cas où la tâche présentant la condition d'activation est reçue d'un appareil de traitement d'informations dans l'étape de réception de tâche (S12), détecter un état de l'utilisateur authentifié ;
une étape de notification d'utilisateur (S15) consistant à, en réponse à une réception de la tâche présentant la condition d'activation dans l'étape de réception de tâche avec une pluralité d'utilisateurs authentifiés dans l'étape d'authentification d'utilisateur, transmettre à l'appareil de traitement d'informations une pluralité d'éléments d'informations d'identification d'utilisateur pour identifier respectivement la pluralité d'utilisateurs ;
une étape d'acceptation de réponse (S16) consistant à accepter une réponse identifiant un utilisateur désigné parmi la pluralité d'utilisateurs, à partir de l'appareil de traitement d'informations ;
l'étape de détection d'état incluant en outre, dans le cas où la réponse de l'utilisateur désigné est acceptée dans l'étape d'acceptation de réponse, une détection (S17 à S20) de l'état prédéterminé ;
une étape de changement de condition d'activation (S21), en réponse à une détection d'un état prédéterminé dans l'étape de détection d'état (S14, S17 à S20), consistant à changer la condition d'activation ; et
après détection de l'état prédéterminé, une étape d'exécution de tâche (S23) consistant à exécuter la tâche présentant la condition d'activation en réponse à une réauthentification de l'utilisateur dont un état prédéterminé a été détecté.

9. Support d'enregistrement lisible par ordinateur codé avec un programme de commande d'impression exécuté par un ordinateur (111), qui commande un appareil de formation d'image (100) incluant des moyens d'acceptation d'opération (130) acceptant une opération d'un utilisateur, dans lequel le programme de commande d'impression, lorsqu'il est exécuté par l'ordinateur, amène l'ordinateur (111) à effectuer :
une étape d'authentification d'utilisateur (S01) consistant à authentifier l'utilisateur qui fait fonctionner les moyens d'acceptation d'opération ;
une étape de réception de tâche (S12) consistant à recevoir une tâche présentant une condition d'activation ;
une étape de détection d'état (S14, S17 à S20) consistant à, dans le cas où la tâche présentant la condition d'activation est reçue d'un appareil de traitement d'informations dans l'étape de réception de tâche (S12), détecter un état de l'utilisateur authentifié ;
une étape de notification d'utilisateur (S15) consistant à, en réponse à une réception de la tâche présentant la condition d'activation dans l'étape de réception de tâche avec une pluralité d'utilisateurs authentifiés dans l'étape d'authentification d'utilisateur, transmettre à l'appareil de traitement d'informations une pluralité d'éléments d'informations d'identification d'utilisateur pour identifier respectivement la pluralité d'utilisateurs ;
une étape d'acceptation de réponse (S16) consistant à accepter une réponse identifiant un utilisateur désigné parmi la pluralité d'utilisateurs, à partir de l'appareil de traitement d'informations ;
l'étape de détection d'état incluant en outre, dans le cas où la réponse de l'utilisateur désigné est acceptée dans l'étape d'acceptation de réponse, une détection (S17 à S20) de l'état prédéterminé, dans lequel une position relative de l'utilisateur authentifié par rapport à l'appareil de formation d'image est détectée ;
une étape de changement de condition d'activation (S21), en réponse à une détection d'un état prédéterminé dans l'étape de détection d'état (S14, S17 à S20), consistant à changer la condition d'activation ; et
une étape d'exécution de tâche (S06 ; S23) consistant à :
avant que l'état prédéterminé ne soit détecté, exécuter la tâche en réponse à une authentification réussie de l'utilisateur qui fait fonctionner l'appareil de traitement d'informations par les moyens d'authentification d'utilisateur ; ou
après détection de l'état prédéterminé, exécuter la tâche présentant la condition d'activation sur la base de l'opération acceptée par un accepteur, correspondant à une position détectée à un instant auquel l'utilisateur dont un état prédéterminé a été détecté est authentifié, parmi une pluralité d'accepteurs des moyens d'acceptation d'opération qui correspondent respectivement à une pluralité de positions prédéterminées par rapport à l'appareil de formation d'image et sont capables d'accepter des opérations.
